# EUROPEAN PATENT SPECIFICATION

(11) **EP 4 382 445 B1**
(45) Date of publication and mention of the grant of the patent: **30.09.2026**
(21) Application number: 22853033.3
(22) Date of filing: 01.08.2022
(51) Int. Cl.: C08G 63/183, C08G 63/20, B32B 15/08, B32B 15/09, B32B 27/36, C09D 167/02, C08J 5/18

(54) **SEAMLESS CAN AND COATED METAL PLATE**
NAHTLOSE DOSE UND BESCHICHTETE METALLPLATTE
BOÎTE MÉTALLIQUE SANS SOUDURE ET PLAQUE MÉTALLIQUE REVÊTUE

(30) Priority: 02.08.2021 JP 2021126956; 02.08.2021 JP 2021126957
(43) Date of publication of application: 12.06.2024
(73) Proprietor: Toyo Seikan Group Holdings, Ltd., Shinagawa-ku Tokyo 141-8627 (JP)
(72) Inventor: KASHIWAKURA, Takuya, Yokohama-shi, Kanagawa 240-0062 (JP); SAKURAGI, Arata, Yokohama-shi, Kanagawa 240-0062 (JP); YAMAMOTO, Hiromi, Yokohama-shi, Kanagawa 240-0062 (JP); ZHANG, Nan, Yokohama-shi, Kanagawa 240-0062 (JP)
(74) Representative: J A Kemp LLP
(86) International application number: PCT/JP2022/029567
(87) International publication number: WO 2023/013614

(56) References cited:
- WO-A1-2020/100776
- WO-A1-2020/184200
- JP-A- 2001 353 812
- JP-A- 2003 267 336
- JP-A- 2004 285 342
- JP-A- 2006 089 066
- JP-A- 2010 143 080
- JP-A- 2017 226 726
- JP-A- H01 284 431
- JP-A- H03 180 228
- US-A1- 2016 152 371
- US-B2- 8 465 815

## Description

### Technical Field

The present invention relates to a seamless can and a coated metal sheet that can be used to form the seamless can, and more specifically relates to a seamless can in which metal exposure due to harsh drawing and ironing, or coating film peeling due to heat treatment is effectively prevented, and that has an excellent coating film covering property and corrosion resistance and excellent temporal embrittlement resistance and/or aroma sorption resistance, and a coated metal sheet that can be used to form the seamless can with high productivity.

### Background Art

An organic resin-coated metal sheet (a thermoplastic resin-coated metal sheet) obtained by coating a metal sheet such as aluminum with a plastic film made of a thermoplastic resin (a thermoplastic resin film) has long been known as a material for cans. It is also well known to subject the organic resin-coated metal sheet to a process such as drawing or drawing and ironing to form a seamless can to be filled with a beverage or the like, or press-mold the sheet to form a can lid, such as an easy-open end can lid. For example, an organic resin-coated metal sheet that includes, as an organic resin coating layer, a thermoplastic resin film made of a crystalline polyester resin mainly including ethylene terephthalate units is used as a can material for a seamless can (hereinafter, may be referred to as drawn and wall-ironed can) molded by drawing and ironing or the like (e.g., Patent Document 1). This organic resin-coated metal sheet can be subjected to drawing and ironing molding or the like under dry conditions without using a coolant (cooing and lubricating agent). Thus, this metal sheet has an environmental advantage as compared to a known case where a coolant is used to subject a metal sheet to drawing and ironing molding.

Such an organic resin-coated metal sheet is produced by a method in which a pre-formed thermoplastic resin film made of thermoplastic polyester resin or the like is attached to a metal sheet by thermal adhesion, or a film lamination method such as an extrusion lamination method in which a molten thin film of extruded thermoplastic polyester resin or the like is attached to a metal sheet.

However, in the film lamination method, when forming the film, it is difficult to control the film thickness at a small thickness and the thickness of the film tends to increase, which may be problematic in terms of economic efficiency.

In place of the organic resin-coated metal sheet according to such a film lamination method, it has also been proposed to produce a drawn and wall-ironed can under dry conditions from a coated metal sheet obtained by forming a coating film on a metal sheet by a coating method capable of forming a film with a small thickness.

For example, Patent Document 2 below proposes a coated metal sheet for a drawn and wall-ironed can, the coated metal sheet being a double-sided coated metal sheet and including a film to be on a can inner surface side after processing and a film to be on a can outer surface side after processing, in which the film to be on the can inner surface side after processing has a dry coating amount of from 90 to 400 mg/100 cm² and a glass transition temperature of 50 to 120°C and has a pencil hardness of H or more, a percent elongation of from 200 to 600%, and a kinetic friction coefficient of from 0.03 to 0.25 under a test condition of 60°C, and the film to be on the can outer surface side after processing has a dry coating amount of from 15 to 150 mg/100 cm² and a glass transition temperature of from 50 to 120°C and has a pencil hardness of H or more under a test condition of 60°C.

Patent Document 3 relates to a seamless can having a bottom and a body, wherein a thermoplastic resin coating is formed on the outer surface of the seamless can via a polyester-based coating film. Provided is a seamless can of which the entirety including the bottom is colored without compromising the processability and adhesion of a resin coating and without undergoing a printing process.

Patent Document 4 relates to a resin-coated metal sheet that exhibits excellent trimming property at the time of being formed into a seamless can, and is capable of providing a seamless can that closely adheres to the printing ink and exhibits excellent abrasion resistance.

Patent Document 5 relates to a seamless aluminium can having polyester resin coatings formed thereon via non-chromium inorganic surface-treating films.

### Citation List

### Patent Literature

Patent Document 1: JP 2001-353812 A
Patent Document 2: JP 3872998 B
Patent Document 3: WO 2020/184200 A1
Patent Document 4: US 8,465,815 B2
Patent Document 5: US 2016152371 A1

### Summary of Invention

### Technical Problem

In a case where the coated metal sheet is used to mold a seamless can such as a drawn and wall-ironed can under dry conditions, the coated metal sheet is subjected to harsh processing and/or deformation with a temperature rise due to molding heat generation. At this time, if the coating film formed on the metal substrate of the coated metal sheet does not have sufficient processability, the coating film cannot follow the processing of the metal substrate, and a decrease in the coating film covering property or can body breakage may occur due to the occurrence of coating film defects such as metal exposure. Thus, a coating film formed on a metal substrate desirably has excellent processability (can forming processability).

In addition, it has been found that, in a seamless can such as a drawn and wall-ironed can molded under dry conditions from a coated metal sheet, after the can body is molded, adhesion between a coating film and a metal substrate (hereinafter, may be referred to as "coating film adhesion") significantly decreases due to residual stress in the coating film generated by harsh processing such as drawing and ironing. Such a decrease in adhesion adversely affects various performance, such as reducing corrosion resistance. This residual stress can be removed by performing heat treatment on the can body in a predetermined condition, which can improve adhesion. However, in a case where such heat treatment is performed, due to rapid release of the residual stress in the coating film generated by harsh processing, shrinkage force acts on the interface between the coating film and the metal substrate. Particularly at a thinned site of a can trunk portion where processing is harsh, metal exposure may occur due the coating film peeling from the metal substrate, leading to reduction in the coating film covering property. Thus, the coating film desirably does not peel (has coating film peeling resistance) at the time of such heat treatment.

On the other hand, a polyester-based coating film formed from a polyester-based coating composition has a specific problem in that processability decreases (temporal embrittlement) when stored over time in a predetermined environment. The reason for the occurrence of the temporal embrittlement phenomenon has not yet been accurately identified, but the inventors of the present invention presume it to be as follows. That is, the coating film becomes embrittled and processability is reduced due to reorientation (transition to an equilibrium state) of the molecular chain of the polyester resin due to enthalpy relaxation over time in the coating film. When drawing and ironing or the like is performed under dry conditions using the coated metal sheet as described above in a state where the coating film has become embrittled over time, coating film defects such as metal exposure are likely to occur during processing, the coating film covering property on the inner surface becomes insufficient, and it is difficult to obtain seamless cans, such as draw/ironed cans, having sufficient corrosion resistance.

Further, the inner surface coating film formed on the inner surface side to be in contact with the contents of the seamless can desirably does not impair the taste and flavor of the content, in addition to having can forming processability. That is, the inner surface coating film desirably helps prevent elution of the coating film component and does not sorb (adsorb) an aroma component (flavor component) of the contents (has aroma sorption resistance).

The above-described Patent Document 2 proposes a coated metal sheet and a draw/ironed can molded from the coated metal sheet capable of withstanding drawing and ironing by forming, on a surface of the coated metal sheet to be on the can inner surface side, a coating film that can achieve hardness, percent elongation, and the like even when heat near 60°C is generated by consecutive drawing and ironing. However, in Patent Document 2, there are no findings on the removal of residual stress and improvement in adhesion by heat treatment after molding the using such a coated metal sheet or drawn and wall-ironed canon coating film peeling due to heat treatment, and thus Patent Document 2 does not solve such issues. Further, there are no findings on temporal embrittlement occurring when the coated metal sheet is stored over time, deterioration in processability due to temporal embrittlement of the coating film, or exhibition of good aroma sorption resistance, and these issues are not solved either.

An object of the present invention is to provide a seamless can, such as a drawn and wall-ironed can, in which coating film defects such as metal exposure at the time of harsh processing such as drawing and ironing molding and occurrence of coating film peeling due to heat treatment after can molding are suppressed, having an excellent coating film covering property even after heat treatment, and an excellent corrosion resistance, and also having excellent temporal embrittlement resistance capable of suppressing occurrence of coating film defects even when subjected to harsh processing such as drawing and ironing or the like after storage over time, and excellent aroma sorption resistance capable of suppressing the sorption of aroma components contained in the content, and a coated metal sheet that can be used to form the seamless can.

### Solution to Problem

According to the present invention, provided is a seamless can including an inner surface coating film at least on a can inner surface side, wherein, when the inner surface coating film contains a non-crystalline polyester resin and a total amount of polyvalent carboxylic acid components in the non-crystalline polyester resin is 100 mol%, a content of an aromatic dicarboxylic acid is 70 mol% or more, and the inner surface coating film has a gel fraction (A) represented by Formula (1a) below of less than 90%: $Gel fraction \left(A\right) = \left(W2a/W1a\right) \times 100 \left(%\right)$ wherein W1a represents a mass of the inner surface coating film isolated from a coated metal substrate cut out from the seamless can, and W2a represents a mass of the isolated inner surface coating film after being immersed in methyl ethyl ketone (MEK) at ordinary temperature (20°C ± 5°C) for 60 minutes and then taken out and dried.

In the seamless can of the present invention, preferably,
[1] the inner surface coating film has a gel fraction (B) represented by Formula (2a) below higher than the gel fraction (A) by 10% or more: $Gel fraction \left(B\right) = \left[\left(W4a-W5a\right)/\left(W3a-W5a\right)\right] \times 100 \left(%\right)$ where W3a represents a mass of a coated metal substrate cut out from the seamless can and having the inner surface coating film formed thereon, W4a represents a mass of the coated metal substrate after being immersed in methyl ethyl ketone (MEK) at 80°C for 60 minutes and then taken out and dried, and W5a represents a mass of a metal substrate after the inner surface coating film is removed from the coated metal substrate;
[2] the inner surface coating film contains a resol-type phenolic resin and/or an amino resin as a curing agent;
[3] a content of isophthalic acid in the non-crystalline polyester resin is less than 21 mol%;
[4] when the total amount of polyvalent carboxylic acid components in the non-crystalline polyester resin is 100 mol%, a content of terephthalic acid is 60 mol% or more;
[5] when the total amount of polyvalent carboxylic acid components in the non-crystalline polyester resin is 100 mol%, the content of isophthalic acid is 2 mol% or more and less than 21 mol%;
[6] the content of isophthalic acid in the non-crystalline polyester resin is 4 mol% or more;
[7] a thickness of a central portion of a can trunk is from 20 to 75% of a thickness of a central portion of a can bottom, and a thickness of the inner surface coating film at the central portion of the can trunk is from 20 to 75% of a thickness of the inner surface coating film at the central portion of the can bottom;
[8] a thickness ratio of the inner surface coating film to a metal substrate (thickness of the inner surface coating film/thickness of the metal substrate) is substantially identical in a can bottom portion and a can trunk portion;
[9] the seamless can further includes an outer surface coating film on a can outer surface side, the outer surface coating film including a non-crystalline polyester resin and an amino resin as a curing agent;
[10] the outer surface coating film has a gel fraction (A) represented by Formula (3a) below of less than 90%: $Gel fraction \left(A\right) = \left(W7a/W6a\right) \times 100 \left(%\right)$ where W6a represents a mass of the outer surface coating film isolated from a coated metal substrate cut out from the seamless can, and W7a represents a mass of the isolated outer surface coating film after being immersed in methyl ethyl ketone (MEK) at ordinary temperature (20°C ± 5°C) for 60 minutes and then taken out and dried;
[11] a heat shrinkage rate of the inner surface coating film at a central portion of a can trunk represented by Formula (5) below is 30% or less: $Heat shrinkage rate \left(%\right) = \left({ΔL}_{1}/{L}_{0}\right) \times 100$ where L₀ is an initial length of the coating film isolated from the central portion of the can trunk in a height direction, and ΔL₁ is a maximum shrinkage amount of the coating film of a portion corresponding to L₀ in the height direction when the temperature is raised from 30°C to 200°C at a temperature rise rate of 5°C/min while applying a load of 5.20 × 10⁵N/m₂ per unit area;
[12] a heat shrinkage rate of the inner surface coating film at a central portion of a can trunk represented by Formula (6) below is 50% or less: $Heat shrinkage rate \left(%\right) = \left({ΔL}_{2}/{L}_{0}\right) \times 100$ where L₀ is an initial length of the coating film isolated from the central portion of the can trunk in a height direction, and ΔL₂ is a maximum shrinkage amount of the coating film of a portion corresponding to L₀ in the height direction when the temperature is raised from 30°C to 200°C at a temperature rise rate of 5°C/min in an unloaded state; and
[13] a covering degree of the inner surface coating film is less than 200 mA in terms of Enamel rater value (ERV).

According to the present invention, also provided is a coated metal sheet for a seamless can, the coated metal sheet including an inner surface coating film at least on a surface to be a can inner surface after processing, wherein when the inner surface coating film contains a non-crystalline polyester resin and a resol-type phenolic resin and/or an amino resin as a curing agent and a total amount of polyvalent carboxylic acid components in the non-crystalline polyester resin is 100 mol%, a content of an aromatic dicarboxylic acid is 70 mol% or more, the inner surface coating film has a gel fraction (A) represented by Formula (1b) shown below of less than 90%, and the inner surface coating film has a gel fraction (B) represented by Formula (2b) shown below higher than the gel fraction (A) by 10% or more: $Gel fraction \left(A\right) \left(%\right) = \left(W2b/W1b\right) \times 100$
where W1b represents a mass of the inner surface coating film isolated from a coated metal substrate cut out from the coated metal sheet, and W2b represents a mass of the isolated inner surface coating film after being immersed in methyl ethyl ketone (MEK) at ordinary temperature (20°C ± 5°C ) for 60 minutes then taken out and dried; $Gel fraction \left(B\right) \left(%\right) = \left[\left(W4b-W5b\right)/\left(W3b-W5b\right)\right] \times 100$
where W3b represents a mass of a coated metal substrate cut out from the coated metal sheet and having the inner surface coating film formed thereon, W4b represents a mass of the coated metal substrate after being immersed in methyl ethyl ketone (MEK) at 80°C for 60 minutes and then taken out and dried, and W5b represents a mass of a metal substrate after the inner surface coating film is removed from the coated metal substrate.

In the coated metal sheet of the present invention, preferably,
[1] the coated metal sheet further includes an outer surface coating film on a surface to be a can outer surface after processing, wherein the outer surface coating film contains a non-crystalline polyester resin and an amino resin as a curing agent, and the outer surface coating film has a gel fraction (A) represented by Formula (3b) shown below of less than 90%: $Gel fraction \left(A\right) \left(%\right) = \left(W7b/W6b\right) \times 100$ where W6b represents a mass of the outer surface coating film isolated from a coated metal substrate cut out from the coated metal sheet, and W7b represents a mass of the isolated outer surface coating film after being immersed in methyl ethyl ketone (MEK) at ordinary temperature (20°C ± 5°C ) for 60 minutes and then taken out and dried;
[2] a content of isophthalic acid in the non-crystalline polyester resin contained in the inner surface coating film is less than 21 mol%; and
[3] a content of isophthalic acid in the non-crystalline polyester resin contained in the inner surface coating film is 4 mol% or more.

In the present specification, ordinary temperature means a temperature of 20°C ± 5°C.

### Advantageous Effects of Invention

In the seamless can and the coated metal sheet of the present invention, when the gel fraction (mass ratio of coating film component gelled by crosslinking reaction and insoluble in solvent) representing the degree of crosslinking of the entire inner surface coating film, more specifically, the gel fraction (A) of the inner surface coating film determined by the above Formulas (1a) and (1b) is in the above range, there is no possibility that coating film defects such as metal exposure occur or can body breakage occurs even when the inner surface coating film is subjected to harsh processing such as drawing and ironing under dry conditions, the residual stress of the coating film generated during processing can be reduced, and thus peeling of the coating film during heat treatment can be effectively suppressed, the coating film covering property is excellent even after heat treatment, the residual stress is removed by heat treatment, coating film adhesion is improved, and thus excellent corrosion resistance can be exhibited.

This is clear from the results of the experimental examples described later, and it is clear that the coated metal sheet of the present invention has a good coating film covering property such that the degree of coverage of the inner surface coating film expressed in terms of ERV is less than 200 mA even after molding a drawn and wall-ironed can by drawing and ironing and subjecting the can to heat treatment after molding, and has excellent can forming processability and coating film peeling resistance.

As described above, it is presumed that the temporal embrittlement of the polyester-based coating film is caused by reorientation (transition to an equilibrium state) of the molecular chain of the polyester resin due to enthalpy relaxation. As a result of intensive studies on the temporal embrittlement of the polyester-based coating film, the inventors of the present invention have found that the enthalpy relaxation phenomenon of the polyester resin, which causes the temporal embrittlement, is greatly affected by the constituent monomers of the polyester resin. This will be described in detail below.

Generally, the polyester resin used as a main component of the polyester-based coating film often contains a large amount of an aromatic dicarboxylic acid such as terephthalic acid or isophthalic acid as a polyvalent carboxylic acid component which is a constituent monomer for the purpose of ensuring heat resistance, strength, and the like of the coating film. The inventors of the present invention have found that when a polyester resin containing an isophthalic acid component in a certain proportion (ratio) or more among such aromatic dicarboxylic acid components is used, enthalpy relaxation and associated temporal embrittlement of the coating film are likely to occur, and have also found that when a polyester resin having an isophthalic acid component content of less than a certain proportion (ratio) is used as a polyvalent carboxylic acid component constituting the polyester resin, the enthalpy relaxation can be suppressed, and the temporal embrittlement of the coating film can be prevented.

From such a perspective, in the present invention, using a non-crystalline polyester resin having a content of an isophthalic acid component of less than 21 mol% when the total amount of polyvalent carboxylic acid components constituting the non-crystalline polyester resin is 100 mol% makes it possible to effectively suppress temporal embrittlement of the coating film, and a seamless can such as a drawn and wall-ironed can can be provided in which metal exposure is effectively prevented even when subjected to harsh processing such as drawn and ironing or the like under dry conditions after storage over time such that the thickness of the inner surface coating film at a central portion of a can trunk has a thickness of from 20 to 75% of the thickness of the inner surface coating film of a central portion of a can bottom, the seamless can having an excellent coating film covering property even after drawing and ironing, and also having excellent corrosion resistance.

This is also clear from the results of Experimental Examples 1 to 14 described below. The coated metal sheet used in the present invention has excellent processability even when subjected to a bending test after being stored under a condition of 40°C for one month, and is excellent in temporal embrittlement resistance.

Further, as a result of intensive studies on the aroma sorption resistance of a polyester-based inner surface coating film formed on the inner surface side in contact with the contents of a seamless can molded by drawing and ironing a coated metal sheet, the inventors of the present invention have found that the sorption behavior of aroma components is greatly affected by the constituent monomers of the polyester resin used as the main component of the coating film. This will be described in detail below.

A polyester resin used as a main component of a polyester-based coating film often contains a large amount of an aromatic dicarboxylic acid such as terephthalic acid or isophthalic acid as a polyvalent carboxylic acid component which is a constituent monomer for the purpose of ensuring heat resistance, strength, and the like of the coating film. It has been found that when a coating film is formed using a polyester resin containing a certain proportion or more of isophthalic acid among such aromatic dicarboxylic acids, it is difficult to sorb aroma components. The reason for this has not yet been accurately elucidated, but the inventors of the present invention presume it as follows. That is, it is presumed that when a polyester resin containing isophthalic acid at a certain proportion or more is used as the polyvalent carboxylic acid component, the coating film to be formed is densified (made to have high density) as compared with the case where a polyester resin having a low content of isophthalic acid (e.g., a polyester resin in which the polyvalent carboxylic acid component is composed only of terephthalic acid) is used, whereby diffusion of the aroma component into the coating film can be suppressed, and as a result, sorption of the aroma component can be reduced.

From such a perspective, in the present invention, forming a polyester-based inner surface coating film using a non-crystalline polyester resin having an isophthalic acid content of 4 mol% or more, particularly 10 mol% or more, when the total amount of polyvalent carboxylic acid components constituting the non-crystalline polyester resin is 100 mol%, makes it possible to densify of the coating film structure (make the coating film structure have high density) and to provide a drawn and wall-ironed can having excellent aroma sorption resistance. In addition, since the coating film formed using the above-described polyester resin in which the content of isophthalic acid as the polyvalent carboxylic acid component is 4 mol% or more is also excellent in can forming processability, it is possible to suppress the occurrence of coating film defects such as metal exposure even when drawing and ironing are performed under dry conditions using the coated metal sheet. As a result, it is possible to provide a seamless can that has good aroma sorption resistance and has an excellent coating film covering property and corrosion resistance at the inner surface.

The above-described effects of the seamless can of the present invention are apparent from the results of experimental examples which will be described later, and it can be seen that the drawn and wall-ironed can of Experimental Example 15 having a polyester-based inner surface coating film using a non-crystalline polyester resin containing 4 mol% or more of isophthalic acid have a significantly reduced limonene sorption rate and are excellent in aroma sorption resistance as compared with the drawn and wall-ironed can of Experimental Example 23 having a polyester-based inner surface coating film having substantially the same composition except that the content of isophthalic acid is low.

### Description of Embodiments

### Coated Metal Sheet

A first important characteristic of the coated metal sheet of the present invention is that a gel fraction, which represents the degree of crosslinking of the entire inner surface coating film, is in a predetermined range. More specifically, it is desirable that the gel fraction (A) of the inner surface coating film measured in the state of an isolated coating film obtained by the above Formula (1b) is less than 90%. The reason for this will be described below.

As described above, in a seamless can such as a drawn and wall-ironed can molded from a coated metal sheet under dry conditions, the adhesion (hereinafter, may be referred to as "coating film adhesion") between the coating film and a metal substrate may significantly deteriorate due to residual stress in the coating film generated by harsh processing such as drawing and ironing after can body molding, and various performance such as corrosion resistance may be adversely affected. This residual stress can be removed by subjecting the can body to heat treatment under a predetermined condition, whereby the coating film adhesion can be improved. However, when such heat treatment is performed, as the residual stress of the coating film generated by harsh processing is relaxed at once, a contraction force acts on the interface between the coating film and the metal substrate, in particular at a thinned site of a can trunk portion where processing is harsh, the coating film is peeled from the metal substrate, and the coating film covering property may deteriorate. To suppress such a coating film peeling phenomenon during the heat treatment, it is necessary to reduce the residual stress of the coating film after processing.

As a result of intensive studies on reduction of the residual stress of the coating film after processing and suppression of coating film peeling at the time of heat treatment due to the reduction, the inventors of the present invention have found that the gel fraction (mass proportion of coating film component gelled by crosslinking reaction and insoluble in a solvent) representing the degree of crosslinking of the entire inner surface coating film, more specifically, the gel fraction (A) of the inner surface coating film measured in the state of an isolated coating film obtained by the above Formula (1b) greatly affects the magnitude of the residual stress of the coating film after processing, and also the coating film peeling phenomenon at the time of heat treatment, and have found a range of the gel fraction (A) with which coating film peeling does not occur at the time of heat treatment.

As described above, when a seamless can such as a drawn and wall-ironed can is molded at a high speed under dry conditions using a coated metal sheet, residual stress is generated in the coating film of the coated metal sheet after processing. In particular, when a main agent resin such as a polyester resin constituting the coating film is highly crosslinked with a curing agent, the residual stress is thought to increase.

The gel fraction (A) in the inner surface coating film of the coated metal sheet is considered to represent the gel fraction of the entire inner surface coating film, that is, the degree of crosslinking of the entire coating film, as will be described later. When the gel fraction (A) in the inner surface coating film of the coated metal sheet is 90% or more, the entire coating film is highly crosslinked. Thus, the residual stress after processing becomes large and it becomes difficult to prevent the coating film from peeling off during heat treatment. On the other hand, when the gel fraction (A) is adjusted to less than 90%, the degree of crosslinking of the entire coating film is not too high and is appropriately controlled. Thus, when the coated metal sheet is subjected to processing such as drawing and ironing, the residual stress of the coating film after processing is thought to become small. This makes it possible to reduce the shrinkage force generated at the interface between the coating film and the metal substrate due to relaxation of the residual stress at the time of heat treatment, and as a result, coating film peeling is prevented from occurring. That is, in the seamless can of the present invention, even after heat treatment is performed after the seamless can is molded, the peeling of the coating film is effectively prevented and the coating film covering property is excellent, and since the residual stress is removed by the heat treatment and the coating film adhesion is improved, excellent corrosion resistance can be exhibited.

As described above, in the inner surface coating film of the coated metal sheet used in the present invention, it is desirable that the gel fraction (A) of the inner surface coating film measured in the state of an isolated coating film obtained by the above Formula (1b) is less than 90%, preferably 40% or more and less than 90%, more preferably from 45 to 88%, still more preferably from 50 to 85%, particularly preferably 55% or more and less than 85%, most preferably from 55 to 80%. When the gel fraction is higher than the above range, coating film peeling may occur during heat treatment. When the gel fraction is lower than 40%, the degree of crosslinking of the coating film becomes low, and there is a possibility that the heat resistance, retort resistance, and also temporal embrittlement resistance decrease.

Also in the outer surface coating film of the coated metal sheet used in the present invention, from the perspective of coating film peeling resistance during heat treatment, it is desirable that the gel fraction (A) of the outer surface coating film obtained by Formula (3b) is less than 90%, preferably 40% or more and less than 90%, more preferably from 50 to 88%, still more preferably from 55 to 85%, particularly preferably from 60 to 84%, and most preferably from 65 to 84%.

Further, in the coated metal sheet of the present invention, the gel fraction (B) of the inner surface coating film determined with Formula (2b) described above and measured in the state of a coated metal sheet is desirably higher than the above gel fraction (A) by 10% or more. The reason for this will be described below.

It is known that in a polyester-based coating film, depending on the combination of a specific polyester resin and a curing agent, polyester-based coating film has a coating film structure in which the curing agent is concentrated in the vicinity of the coating film surface. This is presumed to be a phenomenon caused by low compatibility between the polyester resin and the curing agent. In the case of such a coating film structure, the degree of crosslinking of the surface of the coating film is often higher than the degree of crosslinking of the entire coating film.

In the present invention, as described above, from the perspective of residual stress after molding and coating film peeling during heat treatment, the gel fraction (A) of the inner surface coating film needs to be less than 90% and the degree of crosslinking of the entire coating film needs to be appropriately suppressed. Meanwhile, the surface of the coating film is desirably highly crosslinked from the perspective of factors such as heat resistance and aroma sorption resistance, that is, the coating film desirably has a coating film structure in which the curing agent is concentrated in the vicinity of the coating film surface, as described above.

The above-described gel fraction (B) in the inner surface coating film of the coated metal sheet is obtained by immersing the coated metal substrate in a solvent (MEK) to extract an uncrosslinked component (uncured component) soluble in the solvent in the coating film, and determining the gel fraction from the mass of the coating film component which becomes insoluble in the solvent. When the gel fraction is measured by this method, an uncrosslinked component is not extracted from the surface on the metal substrate side that is not in contact with the solvent, and is instead extracted from the surface of the coating film that is in contact with the solvent. Thus, in the case of a coating film having a concentrated layer in which the curing agent is concentrated at the surface of the coating film as described above and in which only the surface of the coating film is highly crosslinked, the solvent cannot penetrate into the coating film due to the presence of the concentrated layer of the curing agent at the surface of the coating film, and the uncrosslinked component inside the coating film is hardly extracted. Thus, the gel fraction (B) measured by the above method likely strongly reflects the degree of crosslinking in the vicinity of the surface of the coating film rather than the degree of crosslinking of the entire coating film.

On the other hand, the above-described gel fraction (A) is determined from the mass of a coating film component that is insoluble in a solvent by immersing the coating film in the state of an isolated coating film isolated from the coated metal substrate in the solvent and extracting an uncrosslinked component. In the case of this method, since the uncrosslinked portion is extracted not only from the surface of the coating film but also from the surface on the metal sheet side, the solvent penetrates into the interior and the uncrosslinked component is extracted even when the coating film has a coating film structure in which the curing agent is concentrated in the vicinity of the surface of the coating film. Thus, the gel fraction (A) measured by the above method likely reflects the degree of crosslinking of the entire coating film. Therefore, in a coating film in which the curing agent is concentrated at the surface of the coating film and only the surface of the coating film is highly crosslinked, a difference occurs between the values of the gel fraction (A) and the gel fraction (B), and the gel fraction (B) often has a higher value. On the other hand, in the case of a coating film in which the compatibility between the polyester resin and the curing agent is high, the curing agent is relatively uniformly distributed in the coating film, and the degree of crosslinking of the entire coating film is uniform, the values of the gel fraction (A) and the gel fraction (B) are often relatively close to each other.

As described above, in the present invention, it is desirable that the degree of crosslinking of the surface of the coating film is higher than that of the entire coating film. Thus, in the inner surface coating film of the coated metal sheet, it is desirable that the gel fraction (B) indicating the degree of crosslinking of the surface of the coating film is higher than the gel fraction (A) indicating the degree of crosslinking of the entire coating film. Specifically, it is desirable that the gel fraction (B) is higher than the gel fraction (A) by 10% or more, preferably 15% or more, and more preferably 20% or more.

The gel fraction (B) in the inner surface coating film of the coated metal sheet is desirably in the range of 50% or more, preferably from 50 to 99%, more preferably from 60 to 98%, still more preferably from 70 to 97%, and particularly preferably from 80 to 97%. These ranges make it possible to provide a coated metal sheet having the above-described performance.

When the difference between the gel fraction (A) and the gel fraction (B) is 10% or less, or when the gel fraction (B) is lower than the above-described range, the degree of crosslinking of the surface of the coating film is low and heat resistance tends to be low. Thus, when a seamless can such as a drawn and wall-ironed can is molded at a high speed, a rise in temperature becomes more pronounced and this may cause the coating film to easily stick to the mold during molding. Especially on the can inner surface side, when the can body is removed from a molding punch after drawing and ironing molding, a phenomenon in which the can body sticks to the molding punch and it is difficult to separate the can body from the molding punch (poor stripping property) occurs. As a result, the can body may buckle or break, resulting in a decrease in productivity. In addition, the aroma sorption resistance of the molded seamless can may decrease.

The gel fraction (B) in the outer surface coating film of the coated metal sheet used in the present invention is calculated by the following Formula (4b). The range of the gel fraction (B) is, although not limited by these ranges, desirably within a range of 40% or more, preferably from 40 to 99%, more preferably from 50 to 98%, still more preferably from 55 to 97%, and particularly preferably from 60 to 95%. $Gel fraction \left(B\right) \left(%\right) = \left[\left(W9b-W10b\right)/\left(W8b-W10b\right)\right] \times 100$

In the formula, W8b represents the mass of the coated metal substrate cut out from the coated metal sheet and having the outer surface coating film formed thereon, W9b represents the mass of the coated metal substrate after being immersed in MEK at 80°C for 60 minutes and then taken out and dried, and W10b represents the mass of the metal substrate after removing the outer surface coating film from the coated metal substrate.

When the gel fraction (B) of the outer surface coating film is lower than the above range, the degree of crosslinking of the surface of the coating film decreases. Thus, the coating film hardness decreases, and there is a possibility that outer surface defects such as coating film scratching may occur during molding of a seamless can, such as a drawn and wall-ironed can.

To obtain a coated metal sheet having temporal embrittlement resistance, it is important for the coated metal sheet of the present invention to have, in addition to the first characteristic described above, a second characteristic in which, when the inner surface coating film of the surface to be the can inner surface side contains a non-crystalline polyester resin and the total amount of polyvalent carboxylic acid components constituting the non-crystalline polyester resin is 100 mol%, the content of an aromatic dicarboxylic acid component is 70 mol% or more and the content of an isophthalic acid component is less than 21 mol%.

In the coated metal sheet of the present invention, when the content of the isophthalic acid component in the non-crystalline polyester resin contained in the inner surface coating film is in the range of less than 21 mol%, preferably less than 20 mol%, more preferably less than 18 mol%, and still more preferably less than 16 mol%, enthalpy relaxation, which is an attributing factor of temporal embrittlement of the coating film, that is, the reorientation of the molecular chains of the polyester resin (transition to an equilibrium state) is suppressed as described above. As a result, the processability of the coating film does not deteriorate even after the coating film is stored over time, and it is possible to mold a seamless can such as a drawn and wall-ironed can having an excellent coating film covering property in which not only can body breakage but also coating film defects such as metal exposure are effectively prevented, despite the drawn and wall-ironed can being molded by harsh processing such as drawing and ironing under dry conditions.

In addition, to obtain a coated metal sheet having aroma sorption resistance, it is important for the coated metal sheet of the present invention to have, in addition to the first characteristic described above, a third characteristic in which, when the inner surface coating film on at least the surface to be the can inner surface side contains a non-crystalline polyester resin and the total amount of polyvalent carboxylic acid components in the non-crystalline polyester resin is 100 mol%, the content of an aromatic dicarboxylic acid is 70 mol% or more and the content of an isophthalic acid is 4 mol% or more.

In the coated metal sheet of the present invention, when the total polyvalent carboxylic acid component in the non-crystalline polyester resin contained in the inner surface coating film is taken as 100 mol%, the content of the isophthalic acid component is in a range of 4 mol% or more, preferably 10 mol% or more, preferably from 10 to 90 mol%, more preferably from 16 to 80 mol%, still more preferably from 21 to 80 mol%, particularly preferably from 21 to 70 mol%, and most preferably from 21 to 51 mol%. These ranges make it possible to densify the coating film (make the coating film have high density) as described above, and as a result, to improve the aroma sorption resistance. Further, these ranges are desirable from the perspective of the can forming processability of the coating film, and it is possible to suppress the occurrence of coating film defects when drawing and ironing and the like are performed.

In the coated metal sheet of the present invention, when a non-crystalline polyester resin appropriately containing an isophthalic acid component as a polyvalent carboxylic acid component in a range that does not affect temporal embrittlement is used, temporal embrittlement resistance and aroma sorption resistance, and further can forming processability at a high level can be achieved in a compatible manner. The content of isophthalic acid of the non-crystalline polyester resin is 2 mol% or more and less than 21 mol%, preferably 4 mol% or more and less than 18 mol%, more preferably 4 mol% or more and less than 16 mol%, still more preferably more than 7.2 mol% and less than 16 mol%, and particularly preferably 11 mol% or more and less than 16 mol%, in consideration of temporal embrittlement resistance and aroma sorption resistance.

It is also important that, when polyvalent carboxylic acid components constituting the non-crystalline polyester resin contained in the inner surface coating film are taken as 100 mol%, the content of the aromatic dicarboxylic acid component is 70 mol% or more, preferably 80 mol% or more, and more preferably 90 mol% or more, from the perspective of the hardness, heat resistance, retort resistance and the like of the coating film to be formed as well as from the perspective of suppressing the temporal embrittlement and aroma component sorption. When the content of the aromatic dicarboxylic acid component is less than 70 mol%, the hardness, heat resistance, aroma sorption resistance, and retort resistance of the coating film may decrease.

The fact that the coated metal sheet of the present invention has excellent temporal embrittlement resistance and excellent processability even after being stored over time is clear from the fact that the ERV (Enamel rater value) of a bent portion of the coated metal sheet of the present invention subjected to bending processing after being stored for one month under the condition of 40°C is less than 3 mA, and the coated metal sheet of the present invention has excellent processability. An evaluation method of the temporal embrittlement evaluation will be described in detail later.

The coated metal sheet of the present invention is desirably a double-sided coated metal sheet further including an outer surface coating film on a surface to be on the can outer surface side after processing, and the outer surface coating film also desirably contains a polyester resin. Additionally, also in the polyester resin contained in the outer surface coating film, when the total amount of polyvalent carboxylic acid components constituting the polyester resin is 100 mol%, the content of the aromatic dicarboxylic acid component is desirably 70 mol% or more, preferably 80 mol% or more, and more preferably 90 mol% or more. Although not limited to these ranges, it is desirable that the content of the isophthalic acid is in the range of 2 mol% or more, preferably from 5 to 90 mol%, more preferably more than 10 mol% and 85 mol% or less, still more preferably from 15 to 80 mol%, particularly preferably from 20 to 80 mol%, and most preferably from 20 to 51 mol% from the perspective of can forming processability. With the content of the isophthalic acid in the above range, the occurrence of coating film defects during molding can be suppressed. Further, terephthalic acid is preferably contained in an amount of 10 mol% or more, preferably from 15 to 90 mol%, more preferably 19 mol% or more and less than 84 mol%, still more preferably from 25 to 80 mol%, particularly preferably from 30 to 80 mol%, and most preferably from 40 to 80 mol%.

The glass transition temperature (Tg) of the inner surface coating film is preferably in the range of 30°C or higher, preferably higher than 40°C, more preferably higher than 50°C and 120°C or lower, still more preferably higher than 55°C and 110°C or lower, particularly preferably from 60 to 100°C, and most preferably higher than 65°C and 90°C or lower. In a case where Tg is lower than the above range, a flavor component of the content is likely to be sorbed when a can body after molding is filled with contents. This may result in poor aroma sorption resistance and the barrier property of the coating film being reduced, which may result in poor corrosion resistance. On the other hand, in a case where Tg is higher than 120°C, processability and elongation of the coating film may be reduced and metal exposure may occur by molding. This results in poor can forming processability, and residual stress in the coating film may increase to cause coating film peeling during heat treatment.

The Tg of the outer surface coating film is also preferably in the range of 30°C or higher, preferably higher than 40°C, more preferably higher than 50°C and 120°C or lower, still more preferably higher than 55°C and 110°C or lower, particularly preferably from 60 to 100°C, and most preferably higher than 65°C and 90°C or lower. In a case where Tg is lower than the range described above, hardness of the coating film is reduced, and thus external surface defects such as coating film scratching may occur. On the other hand, in a case where Tg is higher than 120°C, the processability and elongation of the coating film are reduced and metal exposure may occur by molding, which results in poor can forming processability.

As described above, by using the coated metal sheet including the inner surface coating film at least on the surface to be the can inner surface to mold a seamless can by drawing and ironing, the entirety of the can can be covered with the inner surface coating film continuous from the bottom portion to the trunk portion on the can inner surface side. Further, in a case where a double-sided coated metal sheet also including the outer surface coating film on the surface to be the can outer surface after molding is used, the entirety of the can can be covered with the outer surface coating film continuous from the bottom portion to the trunk portion on the can outer surface side.

Preferably, the film thickness of the inner surface coating film is in a range of from 0.2 to 20 µm, preferably from 1 to 16 µm, and more preferably more than 2 µm and 12 µm or less, as a dry film thickness. In addition, preferably, the dry coating film mass is in a range of from 3 to 300 mg/dm², preferably from 15 to 220 mg/dm², more preferably from 15 to 150 mg/dm², and more preferably greater than 25 mg/dm² and 150 mg/dm² or less. In the case of a thinner film than the above range, metal exposure is likely to occur during molding, leading to a poor covering property of the inner surface coating film. On the other hand, in the case of a thicker film than in the above range, the residual stress generated during processing increases. Thus, coating film peeling becomes more likely to occur during heat treatment after molding, which causes the film thickness to increase beyond necessity and results in inferior economic efficiency.

Further, when the content to be filled in the seamless can is an acidic beverage having strong corrosiveness, it is necessary to make the film thickness relatively thick to ensure corrosion resistance. The film thickness is preferably in a range of more than 5 µm and 16 µm or less, preferably more than 6 µm and 12 µm or less, and more preferably from 6.5 to 10 µm. The dry coating film mass is preferably in s range of more than 70 mg/dm² and 150 mg/dm² or less, preferably more than 85 mg/dm² and 150 mg/dm² or less, and more preferably from 90 to 140 mg/dm². In the case of a thinner film than the above range, the corrosion resistance is inferior, and in a case of exceeding the above range, coating film peeling becomes likely to occur during heat treatment after drawing and ironing molding.

On the other hand, in a case where the content to be filled in the seamless can is a low acidic beverage or the like having a relatively weak corrosive property, the corrosion resistance can be ensured even with a relatively thin film. Thus, the thickness is in a range of 1 µm or more and less than 6.5 µm, preferably more than 2 µm and less than 6.5 µm, and more preferably from 2.5 to 6 µm. Furthermore, preferably, the dry coating film mass is in a range of 15 mg/dm² or more and less than 90 mg/dm², preferably greater than 25 mg/dm² and less than 90 mg/dm², and more preferably from 30 to 85 mg/dm². In the case of a thinner film than the above range, the corrosion resistance is inferior, and in a case of exceeding the above range, the thickness becomes large beyond necessity, which results in inferior economic efficiency.

Preferably, the film thickness of the outer surface coating film is in a range of from 0.2 to 20 µm, preferably from 1 to 16 µm, more preferably more than 2 µm and 12 µm or less, and further preferably more than 2 µm and 6.5 µm or less, as a dry film thickness. In addition, preferably, the dry coating film mass is in a range of from 3 to 300 mg/dm², preferably from 15 to 220 mg/dm², more preferably more than 25 mg/dm² and 150 mg/dm² or less, still more preferably more than 25 mg/dm² and less than 90 mg/dm². In the case of a thinner film than the above range, metal exposure is likely to occur during molding, leading to a poor coating film covering property at the outer surface. On the other hand, in the case of a thicker film than the above range, the residual stress generated during processing increases, and thus coating film peeling becomes likely to occur during heat treatment after drawing and ironing molding.

Note that, with respect to the film thicknesses of the inner surface coating film and the outer surface coating film of the coated metal sheet, it is preferable that the inner surface coating film, which is required to have a higher covering property, is thicker than the outer surface coating film.

Examples of a metal sheet used as the metal substrate of the coated metal sheet include, but are not limited to, a hot-rolled steel sheet, a cold-rolled steel sheet, a molten galvanized steel sheet, an electrogalvanized steel sheet, an alloy plated steel sheet, an aluminum-zinc alloy plated steel sheet, an aluminum sheet, a tin plated steel sheet, a stainless steel sheet, a copper sheet, a copper plated steel sheet, a tin-free steel, a nickel plated steel sheet, an ultra-thin tin plated steel sheet, and a chromized steel sheet, and one obtained by subjecting these sheets to various types of surface treatment, such as phosphoric acid chromate treatment or zirconium-based chemical conversion treatment, application-type treatment in which a water-soluble resin such as polyacrylic acid and a zirconium salt such as aluminum-zirconium carbonate are combined, or the like as necessary.

In the present invention, of the above metal sheets, an aluminum sheet is preferable. As the aluminum sheet, in addition to a pure aluminum sheet, an aluminum alloy sheet, specifically, an aluminum alloy sheet of the 3000 series, the 5000 series, or the 6000 series in "JIS H4000" can be preferably used, and an aluminum alloy sheet is preferable from the perspective of strength. As the aluminum alloy sheet, in addition to the surface-treated aluminum alloy sheet that has been subjected to the various types of surface treatment described above, an untreated aluminum alloy sheet can be used because the coating film made of the coating composition described above has excellent adhesion to the metal substrate.

The thickness of the metal sheet is in a range of from 0.1 to 1.00 mm, preferably from 0.15 to 0.40 mm, more preferably from 0.15 to 0.30 mm, and further preferably from 0.20 to 0,28 mm, from the perspective of can body strength and moldability.

### Inner Surface Coating Film and Outer Surface Coating Film

In the coated metal sheet of the present invention and the seamless can described later, the inner surface coating film, preferably both the inner surface coating film and the outer surface coating film, contain a non-crystalline polyester resin as a main agent, and preferably further contain a curing agent.

In the inner surface coating film, the content of the non-crystalline polyester resin is preferably more than 50 mass%, more preferably 60 mass% or more, further preferably 70 mass% or more, and particularly preferably 80 mass% or more.

Similarly, in the outer surface coating film, the content of the polyester resin, preferably a non-crystalline polyester resin, is preferably greater than 50 mass%, more preferably 60 mass% or more, further preferably 70 mass% or more, and particularly preferably 80 mass% or more.

### Polyester Resin

In the seamless can and the coated metal sheet of the present invention, a polyester resin is used as a main agent (main component) constituting the inner surface coating film and the outer surface coating film (the polyester resin of the inner surface coating film is a non-crystalline polyester resin). Herein, the main agent is defined as a component having the highest content (mass ratio) among resin components constituting the coating film. In the present invention, a mass rate occupied by the polyester resin among resin components constituting the inner surface coating film and the outer surface coating film is preferably greater than 50 mass%, more preferably 60 mass% or more, further preferably 70 mass% or more, and particularly preferably 80 mass% or more.

As the polyvalent carboxylic acid component constituting the polyester resin, as described above, when the total amount of polyvalent carboxylic acid components constituting the polyester resin is taken as 100 mol%, the content of the aromatic dicarboxylic acid is desirably in a range of 70 mol% or more, preferably 80 mol% or more, and more preferably 90 mol% or more. Examples of the aromatic dicarboxylic acid include terephthalic acid, isophthalic acid, orthophthalic acid, and 2,6-naphthalenedicarboxylic acid.

From the perspective of temporal embrittlement resistance, it is desirable that the content of the isophthalic acid is less than 21 mol%, preferably less than 20 mol%, more preferably less than 18 mol%, and still more preferably less than 16 mol% in the polyester resin. In addition, it is preferable that terephthalic acid is contained in an amount of 60 mol% or more, preferably 70 mol% or more, more preferably 80 mol% or more, and still more preferably 90 mol% or more from the perspective of heat resistance and temporal embrittlement resistance.

Further, from the perspective of aroma sorption resistance, it is desirable that the content of the isophthalic acid component is in a range of 4 mol% or more, preferably 10 mol% or more, preferably from 10 to 90 mol%, more preferably from 16 to 80 mol%, still more preferably from 21 to 80 mol%, particularly preferably from 21 to 70 mol%, and most preferably from 21 to 51 mol%. The terephthalic acid component is preferably in an amount of 10 mol% or more, preferably from 20 to 90%, more preferably 20 mol% or more and less than 84 mol%, still more preferably from 25 to 79 mol%, particularly preferably from 30 to 79 mol%, and most preferably from 49 to 79 mol%.

Furthermore, from the perspective of achieving temporal embrittlement resistance, aroma sorption resistance, and can forming processability in a compatible manner, it is desirable that the content of the isophthalic acid is 2 mol% or more and less than 21 mol%, preferably 4 mol% or more and less than 18 mol%, more preferably 4 mol% or more and less than 16 mol%, still more preferably more than 7.2 mol% and less than 16 mol%, and particularly preferably 11 mol% or more and less than 16 mol% in the polyester resin.

Even when a blend body of two or more polyester resins is used as the polyester resin, it is desirable that, when the total amount of all polyvalent carboxylic acid components constituting the blend body of the polyester resins is 100 mol%, the content of the aromatic dicarboxylic acid is in a range of 70 mol% or more, preferably 80 mol% or more, and more preferably 90 mol% or more, and it is desirable that the content of the isophthalic acid is less than 21 mol%, preferably less than 20 mol%, more preferably less than 18 mol%, and still more preferably less than 16 mol% in the polyester resin blend body from the perspective of temporal embrittlement resistance. In addition, it is preferable that terephthalic acid is contained in an amount of 60 mol% or more, preferably 70 mol% or more, more preferably 80 mol% or more, and still more preferably 90 mol% or more.

Further, from the perspective of aroma sorption resistance, it is desirable that the content of the isophthalic acid component is in a range of 4 mol% or more, preferably 10 mol% or more, preferably from 10 to 90 mol%, more preferably from 16 to 80 mol%, still more preferably from 21 to 80 mol%, particularly preferably from 21 to 70 mol%, and most preferably from 21 to 51 mol%.

Furthermore, from the perspective of achieving temporal embrittlement resistance and aroma sorption resistance in a compatible manner, it is desirable that the content of the isophthalic acid is 2 mol% or more and less than 21 mol%, preferably 4 mol% or more and less than 18 mol%, more preferably 4 mol% or more and less than 16 mol%, still more preferably more than 7.2 mol% and less than 16 mol%, and particularly preferably 11 mol% or more and less than 16 mol% in the blend body of the polyester resins.

Examples of a residual component other than the aromatic dicarboxylic acid in the polyvalent carboxylic acid component include: aliphatic dicarboxylic acids such as succinic acid, glutaric acid, adipic acid, azelaic acid, sebacic acid, dodecanedionic acid, and dimer acid; unsaturated dicarboxylic acids such as (anhydrous) maleic acid, fumaric acid, and terpene-maleic acid adducts; alicyclic dicarboxylic acids such as 1,4-cyclohexanedicarboxylic acid, tetrahydrophthalic acid, hexahydroisophthalic acid, and 1,2-cyclohexenedicarboxylic acid; trivalent or higher polyvalent carboxylic acids such as (anhydrous) trimellitic acid, (anhydrous) pyromellitic acid, and methylcyclohexenetricarboxylic acid, and one or two or more thereof can be selected and used.

As the polyvalent carboxylic acid component constituting the polyester resin, an aliphatic dicarboxylic acid or an alicyclic dicarboxylic acid may be contained in an amount as a residual proportion of the aromatic dicarboxylic acid, that is, in an amount of less than 30 mol%. However, when the proportion of the aliphatic dicarboxylic acid component or the alicyclic dicarboxylic acid component is increased, an aroma component is likely to be sorbed, and thus the aroma sorption resistance of the coating film may deteriorate. Thus, it is desirable that the proportion of the aliphatic dicarboxylic acid or the alicyclic dicarboxylic acid in the polyvalent carboxylic acid components constituting the polyester resin is less than 30 mol%, preferably less than 20 mol%, more preferably less than 10 mol%, still more preferably less than 7 mol%, particularly preferably less than 5 mol%, and most preferably less than 4 mol%.

When a blend body of two or more polyester resins is used as the polyester resin and when the total amount of all the polyvalent carboxylic acid components constituting the blend body of the polyester resin is 100 mol%, the proportion of the aliphatic dicarboxylic acid and the alicyclic dicarboxylic acid is preferably less than 30 mol%, preferably less than 20 mol%, more preferably less than 10 mol%, still more preferably less than 7 mol%, particularly preferably less than 5 mol%, and most preferably less than 4 mol%.

In addition, when a small amount of an aliphatic dicarboxylic acid having from 6 to 14 carbons is contained as a polyvalent carboxylic acid component constituting the polyester resin within a range in which aroma sorption resistance is not impaired, processability of the coating film at the time of molding a seamless can is improved, and the coating film covering property of the seamless can can be further improved in some cases. Specific examples of the aliphatic dicarboxylic acid having from 6 to 14 carbons include adipic acid, pimelic acid, suberic acid, azelaic acid, sebacic acid, and dodecanedioic acid. Among the aliphatic dicarboxylic acids having from 6 to 14 carbons, adipic acid and sebacic acid are particularly preferable, and sebacic acid is particularly preferable.

The content of the aliphatic dicarboxylic acid having from 6 to 14 carbons when the total amount of polyvalent carboxylic acid components constituting the polyester resin is 100 mol% is from 0.2 to 15 mol%, preferably 0.3 to 10 mol%, more preferably 0.5 mol% or more and less than 6 mol%, still more preferably from 1 to 5 mol%, particularly preferably 1 mol% or more and less than 4 mol%. When the content is less than the above range, it is difficult to obtain the effect of improving the processability by containing the aliphatic dicarboxylic acid having from 6 to 14 carbons. On the other hand, when the content is more than the above range, enthalpy relaxation of the polyester resin is likely to occur, and the coating film is likely to be embrittled over time. There is also a possibility that the aroma sorption resistance deteriorates.

Additionally, when a blend body of two or more polyester resins is used as the polyester resin, it is preferable to include an aliphatic dicarboxylic acid having from 6 to 14 carbons, preferably adipic acid or sebacic acid within the above range when the total amount of all polyvalent carboxylic acid components constituting the blend body of polyester resins is 100 mol%.

As the polyhydric alcohol component constituting the polyester resin, a polyhydric alcohol component having a molecular structure that hardly causes steric hindrance of a polymer chain is preferably contained in an amount of 20 mol% or more when the total amount of the polyhydric alcohol components constituting the polyester resin is 100 mol%.

Examples of such a polyhydric alcohol component include, but are not limited to, ethylene glycol, propylene glycol, 1,4-butanediol, 2-methyl-1,3-propanediol, and diethylene glycol. It is preferable that at least one or two or more selected from these components are contained in an amount of 20 mol% or more, preferably 30 mol% or more, more preferably 40 mol% or more, still more preferably 50 mol% or more, particularly preferably 60 mol% or more, and most preferably 70 mol% or more in total. This is thought to make stress relaxation caused by rotation of the polymer chains likely to occur when molding the seamless can from the coated metal sheet, and it is presumed that as a result, the residual stress of the coating film after molding is reduced, leading to suppression of coating film peeling during heat treatment. Further, from the perspective of aroma sorption resistance, when the total amount of the polyhydric alcohol components constituting the polyester resin is 100 mol%, the amount of 1,4-butanediol is preferably less than 40 mol%, more preferably less than 30 mol%, still more preferably less than 20 mol%, and particularly preferably less than 10 mol%. When the content of 1,4-butanediol is 40 mol% or more, the aroma sorption resistance may deteriorate.

Also in a case where a blend body of two or more polyester resins is used as the polyester resin, in the total amount of all the polyhydric alcohol components constituting the blend body of the polyester resin, at least one or two or more selected from ethylene glycol, propylene glycol, 1,4-butanediol, 2-methyl-1,3-propanediol, and diethylene glycol is suitably contained in a total amount of 20 mol% or more, preferably 30 mol% or more, more preferably 40 mol% or more, further preferably 50 mol% or more, particularly preferably 60 mol% or more, and most preferably 70 mol% or more, from the perspective of flavor sorption resistance. Further, from the perspective of aroma sorption resistance, when the total amount of the polyhydric alcohol components constituting the polyester resin blend is 100 mol%, the amount of 1,4-butanediol is preferably less than 40 mol%, more preferably less than 30 mol%, still more preferably less than 20 mol%, and particularly preferably less than 10 mol%.

As a residual component of the polyhydric alcohol components, one or a combination of two or more can be used from aliphatic glycols such as 1,2-butanediol, 1,3-butanediol, neopentyl glycol, 1,5-pentanediol, 1,6-hexanediol, 3-methyl-1,5-pentanediol, 2-ethyl-2-butyl-1,3-propanediol, 2,4-diethyl-1,5-pentanediol, 1-methyl-1,8-octanediol, 3-methyl-1,6-hexanediol, 4-methyl-1,7-heptanediol, 4-methyl-1,8-octanediol, 4-propyl-1,8-octanediol, and 1,9-nonanediol; ether glycols such as diethylene glycol, triethylene glycol, polyethylene glycol, polypropylene glycol, and polytetramethylene glycol; alicyclic polyalcohols such as 1,4-cyclohexanedimethanol, 1,3-cyclohexanedimethanol, 1,2-cyclohexanedimethanol, tricyclodecane glycols, and hydrogenated bisphenols; and trihydric or higher polyalcohols such as trimethylolpropane, trimethylolethane, and pentaerythritol.

The polyester resin can be produced by a known method such as polycondensation of one or more types of the polyvalent carboxylic acid components described above and one or more types of the polyhydric alcohol components described above, a method of depolymerization after polycondensation with a polyvalent carboxylic acid component such as terephthalic acid, isophthalic acid, trimellitic anhydride, trimellitic acid, or pyromellitic acid, or ring-opening addition of an acid anhydride such as phthalic anhydride, maleic anhydride, trimellitic anhydride, or ethylene glycol bis-trimellitate dianhydride after polycondensation.

The polyester resin desirably has an acid value of from 0.1 to 40 mgKOH/g, preferably from 0.5 to 25 mgKOH/g, more preferably from 1 to 10 mgKOH/g, still more preferably 1.0 mgKOH/g or more and less than 10 mgKOH/g, particularly preferably 1.0 mgKOH/g to 8 mgKOH/g, and most preferably 1.0 mgKOH/g or more and less than 5 mgKOH/g from the perspective of factors such as curability, retort resistance, and adhesion to the metal substrate. In a case where the acid value is lower than the above range, adhesion between the metal substrate and the coating film may be reduced. On the other hand, in a case where the acid value is higher than the above range, as compared to a case where the acid value is in the above range, the coating film becomes likely to absorb water, which may reduce the retort resistance, and the number of reaction points with the curing agent increases to make the crosslinking density high, and can forming processability and coating film peeling resistance are reduced to cause metal exposure, which may reduce the covering property of the coating film.

In a case where the polyester resin is a blend body in which two or more types of polyester resins are blended, the sum of the values each obtained by multiplying an acid value and a mass fraction of each of the polyester resins is defined as an average acid value of the blend body (AVₘᵢₓ), and the average acid value need only be within the acid value range described above.

A hydroxyl value of the polyester resin is not limited to but is desirably in a range of 20 mgKOH/g or less, preferably 10 mgKOH/g or less, more preferably from 1 to 10 mgKOH/g, and further preferably from 2 to 8 mgKOH/g, from the perspective of factors such as can forming processability, coating film peeling during heat treatment, and retort whitening resistance.

Preferably, the glass transition temperature (Tg) of the polyester resin is 30°C or higher, preferably higher than 40°C, more preferably higher than 50°C and 120°C or lower, still more preferably higher than 55°C and 110°C or lower, particularly preferably from 60 to 100°C, and most preferably higher than 65°C and 90°C or lower. When Tg is lower than the above range, when a seamless can produced by drawing and ironing and the like as described above is filled with contents, an aroma component contained in the content easily diffuses into the coating film due to an increase in mobility of the resin. Thus, a sorption amount of the aroma component to the coating film is increased, which may deteriorate aroma sorption resistance, and also heat resistance, corrosion resistance, and retort resistance. On the other hand, when the Tg is higher than 120°C, the processability and elongation of the coating film are reduced, which results in poor can forming processability, and thus metal exposure may occur by molding. As a result, the covering property of the coating film after molding may be deteriorated, and the residual stress during molding may increase, and thus the coating film peeling resistance during heat treatment may deteriorate.

In the present invention, two or more types of polyester resins each having a different Tg can be blended for use. By blending polyester resins each having a different Tg, it may be possible to form a coating film that is excellent in impact resistance and unlikely to generate a coating film defect even when subjected to external impact, as compared to only using one type of polyester resin.

In this case as well, it is sufficient that Tgₘᵢₓ of the polyester resin blend calculated by the following Formula (7) is within the Tg range described above: $1 / {Tg}_{mix} = \left(W1/Tg1\right) + \left(W2/Tg2\right) + ⋯ + \left(Wm/Tgm\right)$ $W 1 + W 2 + ⋯ + Wm = 1$

In the formula, Tgₘᵢₓ represents the glass transition temperature (K) of the polyester resin blend, and Tg1, Tg2, ···, and Tgm each represent the glass transition temperature (K) of each polyester resin used (polyester resin 1, polyester resin 2, ···, and polyester resin m). W1, W2, ···, and Wm each represent a mass fraction of each of the polyester resins (polyester resin 1, polyester resin 2, ···, and polyester resin m).

The number average molecular weight (Mn) of the polyester resin is not limited to but preferably in a range of from 1,000 to 100,000, more preferably from 3,000 to 50,000, still more preferably from 5,000 to 20,000, and particularly preferably from 10,000 to 20,000, from the perspective of can forming processability. When Mn is smaller than the above range, the coating film may become brittle and thus have poor can forming processability. When Mn is greater than the above range, paint stability may be reduced.

The polyester resin of the inner surface coating film is a non-crystalline polyester resin and the polyester resin of the outer surface coating film is preferably a non-crystalline polyester resin from the perspective of can forming processability, dent resistance, and coating material formation. Here, "non-crystalline" means that no clear melting point of a crystalline component is exhibited in measurement by a differential scanning calorimeter (DSC). As compared to a crystalline polyester resin, the non-crystalline polyester resin has excellent solubility in a solvent and is easily made into a coating material, and it is possible to form a coating film excellent in can forming processability and dent resistance.

Note that in the present invention, a mass ratio occupied by the non-crystalline polyester resin among all the polyester resin components contained in the inner surface coating film and/or the outer surface coating film is preferably greater than 40 mass%, more preferably 50 mass% or more, further preferably 60 mass% or more, particularly preferably 70 mass% or more, and most preferably 80 mass% or more.

### Curing Agent

The inner surface coating film and the outer surface coating film in the coated metal sheet and the seamless can of the present invention preferably contain a curing agent. The curing agent reacts with a functional group, such as a carboxyl group or a hydroxyl group, of the polyester resin as the main component to form a crosslinking structure, which can significantly improve the heat resistance, the retort resistance, and the like of the coating film.

Examples of such a curing agent can include an isocyanate compound, a resol-type phenolic resin, an amino resin, an epoxy group-containing compound, an oxazoline group-containing compound, a carbodiimide group-containing compound, and a β-hydroxyalkylamide compound. In particular, a resol-type phenolic resin and an amino resin are suitable from the perspective of curability, hygiene, and the like.

In the coated metal sheet and the seamless can of the present invention, as a coating composition for forming the inner surface coating film (hereinafter, sometimes referred to as "inner surface coating composition"), a resol-type phenolic resin or an amino resin is suitable, and in particular, a resol-type phenolic resin can be more preferably used from the perspective of can forming processability and aroma sorption resistance.

As a coating composition for forming the outer surface coating film (hereinafter, sometimes referred to as "outer surface coating composition"), an amino resin that can form a transparent coating film without coloring derived from the curing agent can be preferably used. On the other hand, the coating film to be formed becomes yellow, and thus attention needs to be paid in a case where the resol-type phenolic resin described above is used in the coating composition for forming the outer surface coating film.

### Resol-type Phenolic Resin

The resol-type phenolic resin is a resin obtained by reacting a phenolic compound and formaldehyde in the presence of an alkaline catalyst. Examples of the phenolic compound used include o-cresol, p-cresol, p-tert-butylphenol, p-ethylphenol, 2,3-xylenol, 2,5-xylenol, phenol, m-cresol, m-ethylphenol, 3,5-xylenol, and m-methoxyphenol. From these, one, or two or more can be mixed and used.

From the perspective of curability, of the above phenolic compounds, a resol-type phenolic resin containing a phenolic compound that becomes trifunctional in the reaction with formaldehyde as a starting raw material in an amount of more than 20 mass%, preferably more than 30 mass%, more preferably more than 50 mass%, further preferably 60 mass% or more, and particularly preferably 80 mass% or more is preferable.

Examples of the phenolic compound that becomes trifunctional in the reaction with formalin include phenol, m-cresol, m-ethylphenol, 3,5-xylenol, and m-methoxyphenol, and among these, one, or two or more can be selected and used. When the amount of these trifunctional phenolic compounds is 20 mass% or less, sufficient curability cannot be achieved and thus the degree of curing of the coating film may decrease.

Among these trifunctional phenolic compounds, from the perspective of curability, m-cresol is more preferable, and a resol-type phenolic resin containing m-cresol as a main component of the starting raw material (hereinafter, sometimes referred to as "m-cresol-based resol-type phenolic resin") is particularly preferable. As a result, it is possible to achieve a sufficient degree of curing of the coating film, which is desirable from the perspective of heat resistance, corrosion resistance, retort resistance, and the like of the coating film. The main component herein is defined as a component having the highest content (mass ratio) among phenolic compounds serving as the starting raw material.

As the m-cresol-based resol-type phenolic resin, preferably, one containing m-cresol as a starting raw material in an amount of more than 50 mass%, preferably 60 mass% or more, and further preferably 80 mass% or more is preferable.

Other than the above phenolic compounds that become trifunctional, in a case where a phenolic compound that becomes bifunctional in the reaction with formaldehyde is used as the starting raw material, preferably, the content of the phenolic compound is less than 70 mass%, preferably less than 50 mass%, more preferably less than 30 mass%, and still more preferably less than 20 mass%. When the content is 70 mass% or more, the curability may decrease. Examples of the phenolic compound that becomes bifunctional include o-cresol, p-cresol, p-tert-butylphenol, p-ethylphenol, 2,3-xylenol, and 2,5-xylenol.

Furthermore, as the resol-type phenolic resin used in the present invention, from the perspective of compatibility with the polyester resin and curability, one obtained by alkyl-etherifying (alkoxy-methylating) a part or all of methylol groups contained with alcohols having 1 to 12 carbon atoms can be preferably used.

The proportion of the methylol groups to be alkyl-etherified is preferably 50% or more, more preferably 60% or more, and further preferably 80% or more. When the proportion of alkyl etherification is less than 50%, the compatibility with the polyester resin decreases, and the coating film may become cloudy or sufficient curability cannot be achieved. Examples of the alcohol used in alkyl etherification include monovalent alcohols having from 1 to 8 carbon atoms, preferably from 1 to 4 carbon atoms, and examples of suitable monovalent alcohols can include methanol, ethanol, n-propanol, n-butanol, and isobutanol, and n-butanol is more preferable.

The number of the alkyl-etherified methylol groups (alkoxy methyl groups) is preferably 0.3 or more, preferably from 0.5 to 3, as the average of the alkoxy methyl groups per phenol nucleus. When the number is less than 0.3, curability with the polyester resin deteriorates.

The number average molecular weight (Mn) of the resol-type phenolic resin is preferably in a range of from 500 to 3,000, preferably from 800 to 2,500. When Mn is smaller than the above range, the crosslinking density of the coating film to be formed tends to increase, and thus the residual stress generated during molding increases, and the coating film peeling resistance during heat treatment may deteriorate. On the other hand, the curability deteriorates when Mn is larger than the above range. As a result, the heat resistance and corrosion resistance, retort resistance, and the like of the coating film may deteriorate.

### Amino Resin

Examples of the amino resin include a methylolated amino resin obtained by reaction of an amino component such as melamine, urea, benzoguanamine, acetoguanamine, steroguanamine, spiroguanamine, or dicyandiamide, and an aldehyde component such as formaldehyde, paraformaldehyde, acetaldehyde, or benzaldehyde. One obtained by alkyl-etherifying a part or all of the methylol groups of the methylolated amino resin by an alcohol having 1 to 12 carbon atoms is also included in the above amino resin. These can be used alone or in combination of two or more.

As the amino resin, from the perspective of hygiene, can forming processability and the like, a methylolated amino resin using benzoguanamine (benzoguanamine resin), a methylolated amino resin using melamine (melamine resin), or a methylolated amino resin using urea (urea resin) is preferable, the benzoguanamine resin or the melamine resin is more preferable from the perspective of curability (reactivity with the polyester resin), and the benzoguanamine resin is most preferable from the perspective of coating film peeling resistance at the time of heat treatment.

As the benzoguanamine resin, benzoguanamine resins obtained by alkyl-etherifying a part or all of the methylol groups of a benzoguanamine resin with an alcohol such as methanol, ethanol, n-butanol, or i-butanol, for example, a methyl-etherified benzoguanamine resin, an ethyl-etherified benzoguanamine resin, a butyl-etherified benzoguanamine resin, or a mixed-etherified benzoguanamine resin of methyl ether and butyl ether, a mixed-etherified benzoguanamine resin of methyl ether and ethyl ether, and a mixed-etherified benzoguanamine resin of ethyl ether and butyl ether are preferable. Among these, the methyl-etherified benzoguanamine resin and the butyl-etherified benzoguanamine resin are more preferable.

As the melamine resin, melamine resins obtained by alkyl-etherifying a part or all of methylol groups of a melamine resin with an alcohol such as methanol, ethanol, n-butanol, or i-butanol, for example, a methyl-etherified melamine resin, an ethyl-etherified melamine resin, a butyl-etherified melamine resin, or a mixed etherified melamine resin of methyl ether and butyl ether, a mixed etherified melamine resin of methyl ether and ethyl ether, and a mixed etherified melamine resin of ethyl ether and butyl ether are preferable. Among these, the methyl-etherified melamine resin is more preferable, and a methyl-etherified melamine resin of a full etherification type is particularly preferable.

As the urea resin, a urea resin obtained by alkyl-etherifying a part or all of methylol groups of a urea resin with an alcohol such as methanol, ethanol, n-butanol, or i-butanol, for example, a methyl-etherified urea resin, an ethyl-etherified urea resin, a butyl-etherified urea resin, or a mixed etherified urea resin of methyl ether and butyl ether, a mixed etherified urea resin of methyl ether and ethyl ether, and a mixed etherified urea resin of ethyl ether and butyl ether are preferable.

Examples of the functional groups included in the melamine resin and the benzoguanamine resin described above include an imino group (>NH), an N-methylol group (>NCH₂OH), and an N-alkoxymethyl group (>NCH₂OR; R is an alkyl group), and these functional groups act as a reaction point in a crosslinking reaction with a carboxyl group (-COOH) or a hydroxyl group (-OH) contained in the polyester resin, which is a main agent, or in a self-condensation reaction between amino resins (note that the imino group only contributes to the self-condensation reaction).

Note that, with respect to the number of the reaction points (functional groups) described above, when compared between monomers of the melamine resin and the benzoguanamine resin, it is thought that the number of the reaction points of the melamine resin is larger due to the molecular structure. As a result, while the melamine resin has excellent curability, the crosslinking density of the formed coating film tends to increase, and coating film peeling may occur during heat treatment depending on the blended amount. On the other hand, while the benzoguanamine resin has poor curability as compared to the melamine resin, the crosslinking density of the formed coating film is less likely to increase. Thus, the benzoguanamine resin is considered to be more suitable than the melamine resin from the perspective of coating film peeling resistance.

Therefore, to achieve curability and coating film peeling resistance during heat treatment in a compatible manner, a mixed amino resin in which the melamine resin and the benzoguanamine resin are used in combination and mixed in a predetermined ratio is desirably used in some cases. In such a case, the blending amount ratio (mass ratio) of the melamine resin and the benzoguanamine resin is desirably from 90:10 to 5:95, preferably from 80:20 to 10:90, more preferably from 80:20 to 20:80, still more preferably from 75:25 to 25:75, and particularly preferably from 70:30 to 30:70.

The curing agent is desirably blended in a range of from 1 to 40 parts by mass, preferably from 1 to 30 parts by mass, and more preferably from 2 to 20 parts by mass with respect to 100 parts by mass of the polyester resin.

In a case where the resol-type phenolic resin is used as the curing agent, the resol-type phenolic resin is preferably blended in a range of from 1 to 40 parts by mass, preferably from 2 to 30 parts by mass, more preferably from 2 to 25 parts by mass, further preferably from 2.5 to 20 parts by mass, and particularly preferably from 3 to 15 parts by mass with respect to 100 parts by mass of the polyester resin as the main agent (solid content).

When an amino resin is used as the curing agent, the blending amount of the melamine resin is desirably less than 10 parts by mass, preferably less than 5.5 parts by mass with respect to 100 parts by mass of the polyester resin.

When a melamine resin is used as the curing agent, the melamine resin is preferably blended in an amount of 0.1 parts by mass or more and less than 10 parts by mass, preferably 0.1 parts by mass or more and less than 5.5 parts by mass, more preferably from 0.5 to 5.4 parts by mass, still more preferably from 0.5 to 5 parts by mass, particularly preferably from 0.5 to 4 parts by mass, and most preferably 1 part by mass or more and less than 4 parts by mass with respect to 100 parts by mass of the polyester resin.

In a case where a benzoguanamine resin is used as the curing agent, the benzoguanamine resin is preferably blended in an amount of from 4 to 40 parts by mass, preferably from 5 to 30 parts by mass, more preferably from 6 to 28 parts by mass, further preferably from 8 to 25 parts by mass, and particularly preferably from 8 to 24 parts by mass with respect to 100 parts by mass of the polyester resin.

In a case where a mixed amino resin of the melamine resin and the benzoguanamine resin described above is used as the curing agent, the mixed amino resin is preferably blended in an amount of from 2 to 25 parts by mass, preferably from 2 to 20 parts by mass, more preferably from 2.5 to 15 parts by mass, and further preferably 3 parts by mass or more and less than 10 parts by mass with respect to 100 parts by mass of the polyester resin.

When the curing agent amount is less than the above range, sufficient curability cannot be achieved, the degree of crosslinking of the coating film decreases, it is difficult to control the gel fraction (A) and the gel fraction (B) of the coating film within the above range, and the heat resistance tends to decrease. Thus, when the seamless can is molded at a high speed, a rise in temperature becomes more pronounced and this may cause the coating film to easily stick to the mold during molding. In particular, on the inner surface side of the can, at the time of removing the can body from the punch after molding, the can body may buckle or become broken due to a defective stripping property, which lowers productivity. On the can outer surface side, external surface defects such as coating film scratching may occur. In addition, the retort resistance may deteriorate.

On the other hand, when the amount of the curing agent is larger than the above range, it is difficult to control the gel fraction (A) of the coating film within the above range depending on the type of the curing agent to be used, and thus the coating film peeling during heat treatment after molding cannot be suppressed, and the coating film covering property may deteriorate.

### Curing Catalyst

The inner surface coating composition and the outer surface coating composition used in the present invention are preferably blended with a curing catalyst for the purpose of promoting the crosslinking reaction of the polyester resin and the curing agent.

As the curing catalyst, a known curing catalyst can be used. For example, an organic sulfonic acid-based acid catalyst or a phosphoric acid-based acid catalyst such as p-toluenesulfonic acid, dodecylbenzenesulfonic acid, dinonyl naphthalene disulfonic acid, phosphoric acid, alkylphosphoric acid, or an amine-neutralized product thereof can be used. Among the curing catalysts described above, the organic sulfonic acid-based acid catalyst is preferably used, and particularly, dodecylbenzenesulfonic acid or an amine-neutralized product thereof is suitable.

The amount of the curing catalyst is desirably in a range of from 0.01 to 3 parts by mass, preferably from 0.02 to 1.0 parts by mass, more preferably 0.02 parts by mass or more and less than 0.5 parts by mass, further preferably 0.03 parts by mass or more and less than 0.3 parts by mass, particularly preferably 0.04 parts by mass or more and less than 0.2 parts by mass, and most preferably from 0.04 to 0.1 parts by mass, as a solid content, with respect to 100 parts by mass of the polyester resin.

Furthermore, in a case where the amine neutralized product of the acid catalyst (e.g., an amine neutralized product of dodecylbenzenesulfonic acid) is used as the curing catalyst, the content of the acid catalyst excluding the amine is only required to be within the above range. In a case where the content of the curing catalyst is smaller than the above range, there is a possibility that the effect of promoting the curing reaction is not sufficiently obtained. However, in a case where the content of the curing catalyst is larger than the above range, no further effect is expected, and the water resistance of the coating film may be reduced, resulting in deterioration of corrosion resistance, retort resistance, and the like.

Furthermore, the acid catalyst is localized to the surface of the metal substrate due to acid-base interaction, which may lead to a decrease in adhesion between the coating film and the metal substrate, and issues such as peeling off of the coating film may occur when molding a can.

### Coating Composition

The coating composition that forms the coating film of the coated metal sheet of the present invention contains at least the polyester resin described above as the main agent and the curing agent described above, and more preferably the curing catalyst (acid catalyst) described above. Note that, in the present invention, a component having the largest content (mass ratio) is defined as the main agent (main component) among solid components (non-volatile components excluding volatile materials such as water or solvent) that form the coating film in the coating composition.

Furthermore, in the coating composition used in the present invention for the inner surface coating film, among all resin components contained in the coating composition, the content of the non-crystalline polyester resin, which is the main agent, is preferably greater than 50 mass%, more preferably 60 mass% or more, further preferably 70 mass% or more, particularly preferably 80 mass% or more. **In** the coating composition used in the present invention for the outer surface coating film, among all resin components contained in the coating composition, the content of the polyester resin, preferably the non-crystalline polyester resin, which is the main agent, is preferably greater than 50 mass%, more preferably 60 mass% or more, further preferably 70 mass% or more, particularly preferably 80 mass% or more.

In the present invention, examples of the form of the coating composition that can be used in forming the coating film include a solvent-type coating composition and an aqueous coating composition. In the present invention, the solvent-type coating composition is preferable from the perspective of coating properties and the like.

In a case where the coating composition is the solvent-type coating composition, the coating composition contains the polyester resin and the curing agent described above, and an organic solvent as a solvent. Note that the solvent-type coating composition according to the present embodiment is defined as a coating composition made into a coating material by dissolving a main agent resin, a curing agent, and the like in a known organic solvent, in which a mass ratio occupied by the organic solvent in the coating composition is 40 mass% or more.

Examples of the organic solvent include toluene, xylene, aromatic hydrocarbon compounds, ethyl acetate, butyl acetate, methyl ethyl ketone, methyl isobutyl ketone, cyclohexanone, isophoron, methyl cellosolve, butyl cellosolve, ethylene glycol monoethyl ether acetate, diethylene glycol monoethyl ether acetate, ethylene glycol monoacetate, methanol, ethanol, butanol, ethylene glycol monoethyl ether, ethylene glycol monobutyl ether, diethylene glycol monobutyl ether, solvent naphtha, and the like. From these, one, or two or more are selected and used in consideration of solubility, evaporation rate, and the like.

In a case where the coating composition is the aqueous coating composition, the coating composition contains an aqueous medium as a solvent together with a known water-dispersible or water-soluble polyester resin and a curing agent.

As the aqueous medium, similarly to the known aqueous coating composition, water, or a medium obtained by mixing water and an organic solvent such as an alcohol or a polyhydric alcohol, a derivative thereof, or the like can be used as the aqueous medium. In a case where the organic solvent is used, the organic solvent is preferably contained in an amount of from 1 to 45 mass%, and particularly preferably in an amount of from 5 to 30 mass% with respect to the entire aqueous medium in the aqueous coating composition. The composition containing a solvent in the above range improves film-forming performance.

Such an organic solvent preferably has amphiphilicity, and examples thereof include methyl alcohol, ethyl alcohol, isopropyl alcohol, n-butanol, ethylene glycol, methyl ethyl ketone, butyl cellosolve, carbitol, butyl carbitol, propylene glycol monopropyl ether, propylene glycol ethylene glycol monobutyl ether, propylene glycol monomethyl ether, propylene glycol monobutyl ether, dipropylene glycol monomethyl ether, dipropylene glycol monobutyl ether, tripropylene glycol monomethyl ether, and 3-methyl3-methoxybutanol.

The coating composition may contain a lubricant, as necessary. In this case, desirably, the blending amount of the lubricant is in a range of from 0.1 parts by mass to 20 parts by mass, preferably from 0.2 to 10 parts by mass, and more preferably from 0.5 to 5 parts by mass with respect to 100 parts by mass of the polyester resin.

By adding the lubricant, scratches on the coating film during molding processing can be suppressed, and smoothness of the coating film during molding processing can be improved.

Examples of the lubricant that can be added to the coating composition include a fatty acid ester wax that is an esterified product of a polyol compound and a fatty acid, a silicon-based wax, a fluorine-based wax such as polytetrafluoroethylene, a polyolefin wax such as polyethylene, a paraffin wax, lanolin, a montan wax, a microcrystalline wax, a carnauba wax, a silicon-based compound, a petroleum jelly, and the like. One, or two or more of these lubricants can be mixed and used.

To the coating composition, in addition to the above components, a leveling agent, a pigment, a defoaming agent, a coloring agent, and the like, which are blended in a coating composition in the related art, can be added in a known manner.

Further, in a range that does not impair the object of the present invention, other resin components may be included together with the polyester resin. For example, a resin such as polyvinyl acetate, ethylene-vinyl acetate copolymer, a polyolefin-based resin, an epoxy resin, a polyurethane resin, an acrylic resin, a polyvinyl chloride-based resin, a polyvinyl chloride-polyvinyl acetate copolymer resin, polyvinyl alcohol, an ethylene-vinyl alcohol copolymer, polyvinyl pyrrolidone, polyvinyl ethyl ether, polyacrylamide, an acrylamide-based compound, polyethylenimine, starch, gum arabic, methylcellulose, or the like may be included.

In the coating composition, it is suitable that the polyester resin is contained in an amount of from 5 to 55 mass% as a solid content. In a case where the amount of the resin solid content is smaller than the above range, an appropriate coating film amount cannot be ensured, leading to poor covering property of the coating film. On the other hand, in a case where the amount of the resin solid content is larger than the above range, workability and coatability may deteriorate.

### Method for Producing Coated Metal Sheet

In the coated metal sheet of the present invention, the inner surface coating composition containing the above-described polyester resin as a main agent and preferably containing a resol-type phenolic resin and/or an amino resin as a curing agent is used, and the coating is applied to at least the inner surface of the metal sheet so as to have the above-described film thickness.

Preferably, the outer surface coating composition containing the polyester resin as the main agent described above, and preferably further containing an amino resin as a curing agent, is further applied to the surface to be the outer surface of the metal sheet so as to have the film thickness described above.

Baking conditions of the coating composition are appropriately adjusted depending on the types, applied amounts, and the like of the polyester resin, the curing agent, and the metal substrate. The coating composition described above is preferably heat-cured under conditions of a baking temperature of from 150°C to 350°C, preferably higher than 200°C and 320°C or lower, for 5 seconds or longer, preferably from 5 seconds to 30 minutes, particularly preferably from 5 seconds to 180 seconds, to achieve a sufficient degree of curing. In a case where the baking temperature is lower than the above range, a sufficient degree of curing may not be achieved. On the other hand, in a case where the baking temperature is higher than the above range, excessive heating may cause the polyester resin to thermally decompose. In a case where the baking time is shorter than the above range, a sufficient degree of curing may not be achieved. In a case where the baking time is longer than the above range, economic efficiency and productivity decrease.

In the inner surface coating film and the outer surface coating film after baking, as described above, the gel fraction (A) is preferably less than 90%, and the gel fraction (B) is preferably higher than the gel fraction (A) by 10% or more.

The coated metal sheet can can be manufactured as follows: coating is performed by a known coating method such as roll coater coating, spray coating, or dip coating as the coating method on at least a surface of the metal sheet to be on the can inner surface side, preferably on both surfaces, and then baking is performed by a heating means such as a coil oven.

In the coated metal sheet of the present invention, on the inner surface coating film formed on the surface to be on the can inner surface side after processing such as drawing and ironing, and/or the outer surface coating film formed on the surface to be on the can outer surface side after processing, a coating film made of another coating composition (solvent-type coating composition or aqueous coating composition) may be formed as necessary, but is preferably not formed from the perspective of economic efficiency.

The outermost layer of a surface to be on the can inner surface side of the coated metal sheet used in the present invention is desirably the coating film formed of the coating composition, preferably the inner surface coating film made of the inner surface coating composition described above, or a layer made of a wax-based lubricant described below formed on the inner surface coating film. Similarly, the outermost layer of a surface to be the can outer surface side of the coated metal sheet used in the present invention is desirably the coating film formed of the coating composition, preferably the outer surface coating film made of the outer surface coating composition described above, or a layer made of the wax-based lubricant described below formed on the outer surface coating film.

Furthermore, in the coated metal sheet of the present invention, the inner surface coating film and the outer surface coating film made of the above-described coating composition have excellent adhesion to the metal substrate. Thus, the inner surface coating film and/or the outer surface coating film is/are suitably formed in such a manner to directly come into contact with the metal sheet, which is the metal substrate.

### Seamless Can

The first characteristic of the seamless can such as the drawn and wall-ironed can of the present invention is that the gel fraction (A) represented by Formula (1a) of the inner surface coating film is less than 90%, like the coated metal sheet described above. The gel fraction (A) is in a range of preferably 40% or more and less than 90%, more preferably from 45 to 88%, still more preferably from 50 to 85%, particularly preferably 55% or more and less than 85%, and most preferably from 55 to 80%. The gel fraction (B) of the inner surface coating film determined by Formula (2a) is preferably higher than the gel fraction (A) by 10% or more, preferably 15% or more, and more preferably 20% or more.

The gel fraction (B) is preferably in a range of 50% or more, preferably from 50 to 99%, more preferably from 60 to 98%, still more preferably from 70 to 97%, and particularly preferably from 80 to 97%.

The gel fraction (A) of the outer surface coating film of the seamless can of the present invention and the gel fraction (B) represented by the following Formula (4a) are also desirably in the same range as that of the outer surface coating film of the coated metal sheet described above. $Gel fraction \left(B\right) = \left[\left(W12a-W13a\right)/\left(W11a-W13a\right)\right] \times 100 \left(%\right)$

In the formula, W11a represents the mass of the coated metal substrate cut out from the seamless can and having the outer surface coating film formed thereon, W12a represents the mass of the coated metal substrate after being immersed in MEK at 80°C for 60 minutes and then taken out and dried, and W13a represents the mass of the metal substrate after removing the outer surface coating film from the coated metal substrate.

The gel fractions (A) and (B) in the coating film of the seamless can can be measured, for example, from the inner surface coating film and/or the outer surface coating film located at a central portion of the can bottom of the seamless can, but no limitation is intended. In the present specification, the central portion of the can bottom of the seamless can is a portion having a relatively small degree of processing associated with seamless can molding and having a thickness approximate to the thickness of the coated metal sheet used for molding.

For the reason described above for the coated metal sheet, from the perspective of temporal embrittlement resistance, the seamless can of the present invention also has, in addition to the first characteristic, the second characteristic in which, when the inner surface coating film located on the inner surface side contains a non-crystalline polyester resin and the total amount of polyvalent carboxylic acid components in the non-crystalline polyester resin is 100 mol%, the content of aromatic dicarboxylic acid is 70 mol% or more and the content of isophthalic acid is less than 21 mol%.

Also in the seamless can of the present invention, since the amount of isophthalic acid in the non-crystalline polyester resin contained in the inner surface coating film is less than 21 mol%, preferably less than 20 mol%, more preferably less than 18 mol%, and still more preferably less than 16 mol%, the enthalpy relaxation of the polyester resin, which is a cause of temporal embrittlement of the coating film, is suppressed, and as a result, the processability of the coating film does not deteriorate over time. Thus, even when the coating film is molded by harsh processing such as drawing and ironing under dry conditions after being stored over time, the coating film is molded as a seamless can having an excellent coating film covering property with less coating film defects such as metal exposure as well as can body breakage. In addition, it is preferable that terephthalic acid is contained in an amount of 60 mol% or more, preferably 70 mol% or more, more preferably 80 mol% or more, and still more preferably 90 mol% or more from the perspective of heat resistance and temporal embrittlement resistance.

Similarly, from the perspective of the aroma sorption resistance of the seamless can, the seamless can has, in addition to the first characteristic, a third characteristic in which, when the inner surface coating film located on the can inner surface side contains a non-crystalline polyester resin, preferably further contains a curing agent and the total amount of polyvalent carboxylic acid components in the non-crystalline polyester resin is 100 mol%, the content of an aromatic dicarboxylic acid is 70 mol% or more and the content of isophthalic acid is 4 mol% or more.

In the seamless can of the present invention, when the amount of isophthalic acid in the non-crystalline polyester resin is in a range of 4 mol% or more, preferably 10 mol% or more, preferably from 10 to 90 mol%, more preferably from 16 to 80 mol%, still more preferably from 21 to 80 mol%, particularly preferably from 21 to 70 mol%, and most preferably from 21 to 51 mol%, as described above, the coating film can be densified (made to have high density), and as a result, the diffusion of aroma components into the coating film can be suppressed.

Further, from the perspective of achieving temporal embrittlement resistance and aroma sorption resistance in a compatible manner, it is desirable that the content of isophthalic acid in the non-crystalline polyester resin is 2 mol% or more and less than 21 mol%, preferably 4 mol% or more and less than 18 mol%, more preferably 4 mol% or more and less than 16 mol%, still more preferably more than 7.2 mol% and less than 16 mol%, and particularly preferably 11 mol% or more and less than 16 mol%.

It is also important that 70 mol% or more, preferably 80 mol% or more, more preferably 90 mol% or more of the polyvalent carboxylic acid component in the non-crystalline polyester resin constituting the coating film is an aromatic dicarboxylic acid for the same reason as described for the coated metal sheet.

Further, desirably, the seamless can further includes an outer surface coating film on the can outer surface side, and the outer surface coating film also contains a polyester resin, and preferably further contains a curing agent. In addition, also in the polyester resin contained in the outer surface coating film, the content of the aromatic dicarboxylic acid component is desirably, but not limited to, 70 mol% or more, preferably 80 mol% or more, and more desirably 90 mol% or more when the total amount of polyvalent carboxylic acid components constituting the polyester resin is 100 mol%.

In addition, it is preferable that in the seamless can, the can bottom portion and the can trunk portion at least on the can inner surface side are continuously covered with the inner surface coating film. Additionally, it is preferable that the can bottom portion and the can trunk portion on the can outer surface side are continuously covered with the outer surface coating film.

Also in the drawn and wall-ironed can of the present invention, as described for the coated metal sheet, preferably, the glass transition temperature (Tg) of the inner surface coating film and the outer surface coating film is in a range of 30°C or higher, preferably higher than 40°C, more preferably higher than 50°C and 120°C or lower, still more preferably higher than 55°C and 110°C or lower, particularly preferably from 60 to 100°C, and most preferably higher than 65°C and 90°C or lower.

In the seamless can of the present invention, the thickness of the inner surface coating film at the central portion of the can trunk is preferably from 20 to 75% of the thickness of the inner surface coating film at the central portion of the can bottom.

That is, the seamless can of the present invention is a drawn and wall-ironed can (DI can), a drawn can (DR cans), a deep drawn can (DRD can), a DTR can, a stretch-drawn and ironed can, and the like molded by a known production method using the above-described coated metal sheet as will be described later. In the present invention, a drawn and wall-ironed can is particularly preferable.

Since the above-described various seamless can is molded from a coated metal sheet by drawing and ironing or the like, the thickness of the inner surface coating film located in the can trunk portion is thinned by processing as the metal substrate, and it is preferable that the thickness of the inner surface coating film at the central portion of the can trunk (central portion in the height direction, thinnest portion) is in a range of from 20 to 75% of the thickness of the inner surface coating film at the central portion of the can bottom. In particular, in the drawn and wall-ironed can, the thickness is preferably from 20 to 60%, more preferably from 20 to 50%, still more preferably from 25 to 45%, particularly preferably from 30 to 45%, and most preferably from 30 to 40%. Regarding the thickness of the outer surface coating film, it is preferable that the thickness of the outer surface coating film at the central portion of the can trunk (center in a height direction, thinnest portion) is from 20 to 75%, preferably from 20 to 60%, more preferably from 20 to 50%, still more preferably from 25 to 45%, particularly preferably from 30 to 45%, and most preferably from 30 to 40% of the thickness of the outer surface coating film of the center of the can bottom.

In the seamless can of the present invention, the thickness of the inner surface coating film at the thinnest portion of the can trunk portion is 80% or less, preferably 70% or less, more preferably 60% or less, and still more preferably 55% or less of the thickness of the inner surface coating film at the thickest portion (non-thinned portion) of the can trunk portion. Further, regarding the outer surface coating film as well, the thickness of the outer surface coating film of the thinnest portion of the can trunk portion is preferably 80% or less, preferably 70% or less, more preferably 60% or less, and still more preferably 55% or less of the thickness of the outer surface coating film of the thickest portion (non-thinned portion) of the can trunk portion.

Preferably, the thickness of the metal substrate at the center of the can bottom of the seamless can is from 0.10 to 0.50 mm, preferably from 0.15 to 0.40 mm, more preferably from 0.15 to 0.30 mm, and further preferably from 0.20 to 0.28 mm. The type of the metal substrate is the same as that of the coated metal sheet used for molding.

In addition, the film thickness of the inner surface coating film at the central portion of the can bottom of the seamless can is the same as the film thickness described above for the coated metal sheet used for molding, but is in a range of from 0.2 to 20 µm, preferably from 1 to 16 µm, more preferably more than 2 µm and 12 µm or less. In addition, preferably, the dry coating film mass is in a range of from 3 to 300 mg/dm², preferably from 15 to 220 mg/dm², more preferably from 15 to 150 mg/dm², more preferably greater than 25 mg/dm² and 150 mg/dm² or less.

When the content to be filled in the seamless can is an acidic beverage having strong corrosiveness, the film thickness of the inner surface coating film at the central portion of the can bottom is preferably in a range of more than 5 µm and 16 µm or less, preferably more than 6 µm and 12 µm or less, and more preferably from 6.5 to 10 µm. The dry coating film mass is preferably in the range of more than 70 mg/dm² and 150 mg/dm² or less, preferably greater than 85 mg/dm² and 150 mg/dm² or less, and more preferably from 90 to 140 mg/dm².

On the other hand, when the content to be filled in the seamless can is a low acidic beverage or the like having relatively weak corrosiveness, the film thickness of the inner surface coating film at the central portion of the can bottom is preferably 1 µm or more and less than 6.5 µm, preferably more than 2 µm and less than 6.5 µm, and more preferably from 2.5 to 6 µm. Preferably, the dry coating film mass is in a range of 15 mg/dm² or more and less than 90 mg/dm², preferably greater than 25 mg/dm² and less than 90 mg/dm², and more preferably from 30 to 85 mg/dm².

Preferably, the film thickness of the outer surface coating film at the central portion of the can bottom is in a range of from 0.2 to 20 µm, preferably from 1 to 16 µm, more preferably greater than 2 µm and 12 µm or less, and further preferably greater than 2 µm and 6.5 µm or less, as dry film thickness. In addition, preferably, the dry coating film mass is in a range of from 3 to 300 mg/dm², preferably from 15 to 220 mg/dm², more preferably from 25 to 150 mg/dm², still more preferably greater than 25 mg/dm² and lower than 90 mg/dm².

### Method for Producing Seamless Can (drawn and wall-ironed can)

The seamless can of the present invention can be produced by using the coated metal sheet of the present invention described above and by using a known molding method. In particular, since the coated metal sheet of the present invention has excellent temporal embrittlement resistance, the coating film of the coated metal sheet maintains excellent elongation, processability, and adhesion even after being stored over time in the state of the coated metal sheet. Therefore, even at the time of harsh processing such as drawing and ironing, it is possible to mold a drawn and wall-ironed can having an excellent coating film covering property without metal exposure causing breakage or peeling of the coating film at the can mouth end. Note that the coated metal sheet of the present invention has excellent moldability and lubrication properties, and thus it is possible to mold the drawn and wall-ironed can not only when using coolant but also when performing molding under dry conditions without using coolant. Hereinafter, a method for producing a drawn and wall-ironed can will be described in detail.

It is preferable to apply a wax-based lubricant to the coating film surface of the coated metal sheet prior to drawing and ironing, With this, drawing and ironing can be efficiently performed under dry conditions. Examples of the wax-based lubricant include, but are not limited to, a fatty acid ester wax, a silicon-based wax, a white petroleum jelly, a rice wax, beeswax, a Japanese wax, a mineral-derived wax such as a montan wax, a Fischer-Tropsch wax, a polyolefin wax such as polyethylene or polypropylene, a paraffin-based wax (solid paraffin, liquid paraffin), a lanolin wax, a microcrystalline wax, and a carnauba wax. Among them, a paraffin wax or a white petroleum jelly, more preferably, a paraffin wax can be used. One, or two or more of these wax-based lubricants can be mixed and used.

Among the above wax-based lubricants, a wax-based lubricant (high-temperature volatile wax-based lubricant) that volatilizes in an amount of 50 mass% or more by short-time (e.g., from 0.1 to 600 seconds, preferably from 1 to 300 seconds, more preferably from 10 to 180 seconds) heat treatment (heating) at a temperature of from 100 to 350°C, preferably from 150 to 250°C, and more preferably about 200°C is desirable, with which the wax-based lubricant can be easily volatilized and removed by heat treatment in a subsequent step after drawing and ironing can molding. Further, when outer surface printing is applied to the can trunk, there is no possibility that the ink is repelled by the wax-based lubricant, which is convenient in terms of outer surface printability. As the high-temperature volatile wax-based lubricant, one that can be volatilized and removed in an amount of 50 mass% or more, preferably 60 mass% or more, more preferably 80 mass% or more, and still more preferably 90 mass% or more by short-time (from 10 to 180 seconds) heat treatment at a temperature of from 150 to 250°C, preferably about 200°C is desirable, and one that has a melting point of from 20 to 100°C, preferably from 25 to 80°C is desirable. The application amount of the wax-based lubricant is desirably in a range of from 1 to 1000 mg/m², preferably from 2 to 500 mg/m², more preferably from 5 to 200 mg/m², still more preferably from 10 to 100 mg/m², and particularly preferably from 20 to 80 mg/m² per one surface of the coated metal sheet from the perspective of moldability and productivity.

In the coated metal sheet on which the wax-based lubricant has been applied, a blank is punched by a cupping press, and a drawn cup is molded by a drawing method.

In the present invention, it is desirable that a drawn ratio RD defined by the following Formula (8) is in a range of from 1.1 to 2.6, particularly in a range of from 1.4 to 2.6, in total (to the drawn and wall-ironed can). When the drawn ratio is larger than the above range, drawn wrinkles may increase and cracks may occur in the coating film to cause metal exposure. $RD = D / d$ where D represents a blank diameter and d represents a can trunk diameter.

Next, the drawn cup is subjected to re-drawing, that is, ironing in a single stage or several stages (drawing and ironing) to thin the can trunk portion. At this time, in the present invention, the temperature of the punch used for molding is preferably adjusted to from 10 to 100°C, preferably from 10 to 80°C, and more preferably from 15 to 70°C. When the punch temperature is lower than the above range, the wax-based lubricant applied to the coated metal sheet does not have a sufficient slidability, and at the time of removing the can body from the punch, a poor stripping property may occur and elongation of the inner surface coating film decreases, which may cause a decrease in the coating film covering property after molding. On the other hand, when the punch temperature is higher than the above range, at the time of removing the can body from the molding punch, a poor stripping property may occur.

In the present invention, desirably, an ironed rate R represented by the following Formula (9) is in a range of from 25 to 80%, preferably from 40 to 80%, more preferably from 50 to 80%, further preferably from 55 to 75%, particularly preferably from 55 to 70%, and most preferably higher than 60% and 70% or less. When the ironed rate is lower than the above range, it is not possible to achieve sufficient thinning, and thus economic efficiency is insufficient. On the other hand, in a case where the ironed ratio is higher than the above range, there is a risk of metal exposure. $R \left(%\right) = \left(tp-tw\right) / tp \times 100$ where tp represents a thickness of the original coated metal sheet, and tw represents a thickness at the central portion of the can trunk side wall of the drawn and wall-ironed can.

In the drawn and wall-ironed can of the present invention, preferably, the thickness at the central portion of the can trunk (central portion in the height direction, the thinnest portion) is thinned to have a thickness of from 20 to 75%, preferably 20 to 60%, more preferably 20 to 50%, further preferably 25 to 45%, particularly preferably 30 to 45%, and most preferably from 30% to 40% of the thickness of the central portion of the can bottom. Similarly, for the thickness of the metal substrate of the drawn and wall-ironed can, preferably, the thickness of the metal substrate at the central portion of the can trunk is from 20 to 75%, preferably from 20 to 60%, more preferably from 20 to 50%, further preferably from 25 to 45%, particularly preferably from 30 to 45%, and most preferably from 30 to 40% of the thickness of the metal substrate in the central portion of the can bottom. In addition, in a case where the drawn and wall-ironed can is molded from the coated metal sheet by drawing and ironing, the thickness of the coating film located in the can trunk portion is thinned in the same manner as the metal substrate by the processing. Accordingly, as described above, the thickness of the coating film at the central portion of the can trunk is from 20 to 75%, preferably from 20 to 60%, more preferably from 20 to 50%, further preferably from 25 to 45%. particularly preferably 30 to 45%, and most preferably from 30% to 40% of the thickness of the coating film at the central portion of the can bottom, which is hardly thinned during can forming.

In the drawn and wall-ironed can of the present invention, the thickness of the thinnest portion of the can trunk portion is 80% or less, preferably 70% or less, more preferably 60% or less, and still more preferably 55% or less of the thickness of the thickest portion (most non-thinned portion) of the can trunk portion.

In addition, in a case where the drawn and wall-ironed can is molded from the coated metal sheet having the inner surface coating film by drawing and ironing as described above, the thickness of the inner surface coating film located in the can trunk portion is thinned by the processing in the same manner as the metal substrate located in the can trunk portion. Accordingly, in the drawn and wall-ironed can of the present invention, the thickness ratio of the inner surface coating film to the metal substrate in the can trunk portion and the thickness ratio of the inner surface coating film to the metal substrate in the can bottom portion are substantially the same. That is, in the drawn and wall-ironed can of the present invention, the thickness ratio of the inner surface coating film to the metal substrate (= thickness of the inner surface coating film/thickness of the metal substrate) is substantially the same in both the can bottom portion and the can trunk portion. Note that "substantially the same" here means that any production errors are included in the range, and for example, means that (thickness of the inner surface coating film/thickness of the metal substrate) of the can trunk portion is in a range of from 0.9 to 1.1 times (thickness of the inner surface coating film/thickness of the metal substrate) of the can bottom portion. Note that the same applies to the outer surface coating film.

Furthermore, in the drawn and wall-ironed can of the present invention, the thickness ratio of the inner surface coating film to the metal substrate in the can trunk portion (= thickness of the inner surface coating film/thickness of the metal substrate) is substantially identical across the entire can trunk portion regardless of a position in the can trunk portion. Note that the same applies to the outer surface coating film.

Note that, desirably, the processing speed of ironing in the single or several stages (moving speed of the punch) is 2000 mm/sec or higher, preferably 3000 mm/sec or higher, more preferably 4000 mm/sec or higher, further preferably 5000 mm/sec or higher, and particularly preferably 6000 mm/sec or higher. By setting the processing speed at the time of ironing to the above speed or higher, processing heat generation becomes large, leading to a high temperature state, which improves processability (elongation) of the coating film. As a result, metal exposure during molding is suppressed, and the covering property of the inner surface coating film and the outer surface coating film after molding can be further improved. Furthermore, by molding at a high temperature, stress relaxation is likely to occur during molding, and thus the residual stress in the coating film after molding can be reduced, which is preferable in terms of suppressing coating film peeling during heat treatment.

After drawing and ironing, doming molding of the bottom portion and trimming of the opening end edge are performed according to a common method as desired.

According to the present invention, after the coated metal sheet is subjected to drawing and ironing or the like, it is preferable to subject the resulting seamless can to a heat treatment step. As described above, in the coated metal sheet and the seamless can of the present invention, since the gel fraction (A) of the inner surface coating film is controlled to less than 90%, peeling of the coating film is effectively prevented even after heating in the heat treatment step.

The residual stress in the coating film generated by the processing can be removed by subjecting the seamless can such as a drawn and wall-ironed can after molding to heat treatment at least in the single stage. Removing the residual stress in the coating film makes it possible to improve the adhesion between the coating film and the metal substrate (coating film adhesion) after the processing. As a result, the corrosion resistance of the coating film is significantly improved, and thus the occurrence of corrosion under the coating film can be suppressed, for example, when the seamless can is filled with contents having a strong corrosive property. The temperature of the heat treatment needs to be higher than the glass transition temperature of the coating film, and is in a temperature range of from 100 to 300°C, and preferably from 150 to 250°C. The period of time of the heat treatment is not particularly limited, and heating is performed for from 0.1 to 600 seconds, preferably from 1 to 300 seconds, and more preferably from 10 to 180 seconds. When the wax-based lubricant used in processing is the high-temperature volatile wax-based lubricant, it is possible to volatilize and remove the lubricant from the coating film surface by this heat treatment.

In a case where the residual stress in the coating film of the seamless can such as the drawn and wall-ironed can is not removed by heat treatment, when the coating film at the central portion of the can trunk (central portion in the height direction) where a degree of processing is large is isolated from the metal substrate and heated, the dimension of the coating film largely changes in a direction in which the residual stress is released (mainly in a can height direction). Thus, by measuring a dimension change amount of the isolated coating film due to heating (heat shrinkage rate), it is possible to provide a rough indication of whether the residual stress is removed by heat treatment. Desirably, the heat shrinkage rate (with load) represented by the following Formula (5) in the inner surface coating film at the central portion of the can trunk isolated from the seamless can is 30% or less, preferably 20% or less, more preferably 15% or less, and further preferably 10% or less. Further, desirably, the heat shrinkage rate (without load) represented by the following Formula (6) is 50% or less, preferably 45% or less, more preferably 40% or less, and further preferably 30% or less. In a case where the heat shrinkage rate is within the range described above, the coating film adhesion is improved and thus excellent corrosion resistance can be exhibited. In a case where the heat shrinkage rate is larger than the range described above, the residual stress is not sufficiently removed, corrosion resistance may reduce due to insufficient coating film adhesion, and the coating film may peel off when the can is subjected to an impact and get dented. In addition, in a case where the outer surface coating film is provided on the can outer surface side, the heat shrinkage rate is also desirably within the range described above in the outer surface coating film at the central portion of the can trunk.

Note that the amount of change in dimension (shrinkage amount) of the isolated coating film due to heating can be measured by a thermomechanical analyzer (TMA) or the like.$Heat shrinkage rate \left(with load\right) = \left({ΔL}_{1}/{L}_{0}\right) \times 100 \left(%\right)$

In the formula, L₀ is an initial length (measurement portion) of the coating film isolated from the central portion of the can trunk in the height direction, and ΔL₁ is the maximum shrinkage amount (maximum value of the shrinkage length) of the coating film of the portion corresponding to L₀ in the height direction when the temperature is raised from 30°C to 200°C at a temperature rise rate of 5°C/min while applying a load of 5.20 × 10⁵N/m₂ per unit area.$Heat shrinkage rate \left(without load\right) = \left({ΔL}_{2}/{L}_{0}\right) \times 100 \left(%\right)$ where L₀ is the initial length (measurement portion) of the coating film isolated from the central portion of the can trunk in the height direction, and ΔL₂ is the maximum shrinkage amount (maximum value of the shrinkage length) of the coating film of the portion corresponding to L₀ in the height direction when the temperature is raised from 30°C to 200°C at the temperature rise rate of 5°C/min in an unloaded state.

After heat treatment and after quenching or cooling, a printed layer is further formed on the can trunk portion in a printing and baking process by a known method as needed, and a finishing varnish layer for protecting the printed layer is formed on the printed layer. As desired, single stage or multi-stage neck-in processing is performed, and flange processing is performed to form a can for seaming. Alternatively, after the seamless can such as the drawn and wall-ironed can is molded, the upper portion thereof can be deformed to form a bottle shape, or the bottom portion thereof can be cut out and another can end can be attached thereto to form a bottle shape.

Preferably, a capacity of the drawn and wall-ironed can according to the present invention is from 150 mL or more, preferably from 150 to 2200 mL, more preferably from 180 to 1200 mL, and further preferably from 300 to 700 mL.

The inner surface coating film of the coated metal sheet according to the present invention has excellent can forming processability, and thus it is possible to suppress metal exposure at the time of harsh processing such as drawing and ironing. In addition, coating film peeling does not occur even in heat treatment after molding. Thus, by adjusting molding conditions such as an ironing speed, it is possible to obtain the seamless can having an excellent coating film covering property in which the inner surface coating film has a degree of coverage of less than 200 mA in terms of an enamel rater value (ERV).

Here, the degree of coverage of the inner surface coating film obtained in terms of ERV is a value obtained by filling the obtained seamless can with salt solution of a concentration of 1 mass%, which is an electrolytic solution, to the vicinity of the can opening and measuring ERV by an enamel rater, and is defined as a current value after connecting an anode electrode to a metal exposure portion formed on the outer surface side of the can bottom while immersing a cathode electrode in the salt solution filled in the can and applying a direct voltage of 6.3 V for 4 seconds at ordinary temperature (approximately 20°C). In such a measurement, larger current flowing indicates that there is a defect in the inner surface coating film, which is an insulator, and that the area of metal exposure on the can inner surface is larger.

Desirably, the degree of coverage of the inner surface coating film of the seamless can in terms of ERV is less than 200 mA, preferably less than 100 mA, and more preferably less than 50 mA. In a case of expressing the degree of coverage in ERV per unit area (cm²), desirably, the degree of coverage is less than 0.70 mA/cm², preferably less than 0.35 mA/cm², and more preferably less than 0.18 mA/cm². Here, the ERV per unit area is a value obtained by dividing the ERV of the drawn and wall-ironed can measured by the method described above by an evaluation area (an area where the inner surface of the can trunk portion and the can bottom portion is in contact with the above-described salt solution).

Note that on the inner surface side of the seamless can, after molding, the inner surface may be further subjected to spray-coating to form another coating film on the inner surface coating film as necessary, but the inner surface coating film has a high degree of coverage even after molding, and thus it is not necessary to perform spray-coating, and preferably, spray-coating is not performed from the perspective of economic efficiency. In other words, the outermost layer on the inner surface side of the seamless can is preferably the coating film made of the coating composition, preferably, the inner surface coating film made of the inner surface coating composition described above, or the layer made of a wax-based lubricant formed on the inner surface coating film described above, and more preferably, the inner surface coating film.

On the other hand, on the can outer surface side, the outer surface coating film may be located on the outmost layer on the can bottom portion where the printed layer is not basically formed, but for the purpose of improving transportability of the can body or the like, a coating film made of another coating composition may be further formed on the outer surface coating film formed on the surface layer on the outer surface side of the can bottom portion. That is, the outermost layer of the outer surface of the can bottom portion is desirably a coating film made of a coating composition, preferably the outer surface coating film, or a layer made of a wax-based lubricant applied on the outer surface coating film described above, more preferably the outer surface coating film is positioned at the outermost layer of the can bottom portion.

Since the coated metal sheet of the present invention can be suitably used for drawn and wall-ironed can applications made by harsh molding processing, the coated metal sheet can be suitably used for applications other than drawn and wall-ironed cans, for example, seamless cans such as drawn cans (DR cans), deep-drawn cans (DRD cans), DTR cans, and stretch-drawn and ironed cans produced by a known method, can lids, and the like. As a shape of the can lid, a known shape such as an easy-open lid in which a score for forming an opening for pouring a content and a tab for opening are provided can be employed, and either a full open type or a partial open type (stay-on type) may be employed.

### Example

The present invention will be specifically described with reference to the following experimental examples. Note that simple "parts" indicate "parts by mass".

Various measurement items of polyester resins A to S were according to the following methods. All the polyester resins are non-crystalline polyester resins. The characteristics (monomer composition, Tg, acid value, number average molecular weight) of the polyester resin are shown in Table 1.

### Measurement of number average molecular weight

The number average molecular weight was measured by using a calibration curve of standard polystyrene with gel permeation chromatography (GPC).

### Measurement of glass transition temperature

The glass transition temperature was measured by using a differential scanning calorimeter (DSC) at a temperature rise rate of 10°C/min.

### Measurement of acid value

One g of a solid product of a polyester resin was dissolved in 10 ml of chloroform and titrated with 0.1 N KOH ethanol solution to determine the acid value of the resin (mg KOH/g). As an indicator, phenolphthalein was used.

### Measurement of monomer composition

30 mg of a solid product of a polyester resin was dissolved in 0.6 mL of deuterated chloroform and ¹H-NMR measurement was performed to determine a monomer composition ratio from peak intensities.

### Experimental Examples 1 to 23

### Preparation of Inner Surface Coating Composition

A polyester resin such as a polyester resin A (acid value: 4 mgKOH/g, hydroxyl value: 5 mgKOH/g, Tg: 84°C, Mn = 18,000, polyvalent carboxylic acid component composition: terephthalic acid component/trimellitic acid component = 99.8/0.2 mol%, polyhydric alcohol component composition: ethylene glycol component/propylene glycol component = 27.4/72.6 mol%) was used as a main agent, a resol-type phenolic resin (m-cresol-based resol-type phenolic resin in which methylol group is alkyl-etherified with n-butanol, proportion of alkyl-etherified methylol group: 90 mol%, Mn = 1,200), a benzoguanamine resin A (butyl-etherified benzoguanamine resin, imino group-methylol group-containing partially etherified type), a benzoguanamine resin B (methyl etherified benzoguanamine resin, imino group-methylol group-containing partially etherified type) or a melamine resin (methyl etherified melamine resin, full ether type) was used as a curing agent, and dodecylbenzenesulfonic acid was used as a curing catalyst (acid catalyst). As the dodecylbenzenesulfonic acid, "Dodecylbenzenesulfonic acid (soft type) (mixture)" manufactured by Tokyo Chemical Industry Co., Ltd. was used.

The polyester resin was dissolved in a mixed solvent of methyl ethyl ketone/solvent naphtha = 50/50 (mass ratio) to obtain a polyester resin solution with a solid content of 30 mass%. The curing agent was diluted with methyl ethyl ketone to obtain a curing agent solution having a solid content of 30 mass%. After the dodecylbenzenesulfonic acid was amine-neutralized with 2-dimethylaminoethanol, the resulting neutralized product was dissolved in isopropanol to obtain a dodecylbenzenesulfonic acid solution with a solid content of 30 mass%.

Next, the polyester resin solution, the curing agent solution, and the acid catalyst solution were placed in a glass container so as to have a predetermined solid content blending ratio, and the mixture was stirred for 10 minutes to prepare a solvent-based coating composition having a solid content concentration of 30 mass%.

Table 2 and Table 3 show the formulation of the inner surface coating composition (type of polyester resin, type of curing agent, solid content blending ratio of polyester resin/curing agent/acid catalyst).

### Preparation of Outer Surface Coating Composition

The polyester resin was used as a main agent, the melamine resin (methyl-etherified melamine resin, full-ether type) and the benzoguanamine resin A (butyl-etherified benzoguanamine resin, imino group-methylol group-containing partial etherification type) were used as curing agents, and the dodecylbenzenesulfonic acid described above was used as a curing catalyst (acid catalyst).

The polyester resin was dissolved in a mixed solvent of methyl ethyl ketone/solvent naphtha = 50/50 (mass ratio) to obtain a polyester resin solution with a solid content of 30 mass%. The curing agent was diluted with methyl ethyl ketone to obtain a curing agent solution having a solid content of 30 mass%. After the dodecylbenzenesulfonic acid was amine-neutralized with 2-dimethylaminoethanol, the resulting neutralized product was dissolved in isopropanol to obtain a dodecylbenzenesulfonic acid solution with a solid content of 30 mass%.

Next, the polyester resin solution, the curing agent solution, and the acid catalyst solution were placed in a glass container so as to have a predetermined solid content blending ratio, and the mixture was stirred for 10 minutes to prepare a solvent-based coating composition having a solid content concentration of 30 mass%.

Table 2 and Table 3 show the formulation of the outer surface coating composition (type of polyester resin, type of curing agent, solid content blending ratio of polyester resin/curing agent/acid catalyst).

### Production of Coated Metal Sheet

A phosphoric acid chromate-based surface-treated aluminum sheet (3104 alloy, sheet thickness: 0.27 mm) was used as the metal sheet, a surface to be on the outer surface side after molding was first coated with the outer surface coating composition by a bar coater in such a manner that a dry coating film mass after baking was 40 mg/dm² (approximately 3 µm), and drying was performed at 120°C for 60 seconds. Thereafter, a surface to be on the inner surface side on the opposite side was coated with the inner surface coating composition by a bar coater in such a manner that a dry coating film mass after baking was 88 mg/dm² (approximately 6.4 µm), drying was performed at 120°C for 60 seconds, and then baking was performed at 250°C (furnace internal temperature in the oven) for 30 seconds to produce the coated metal sheet.

### Production of Drawn and Wall-ironed Can

A paraffin wax (that can be volatilized and removed in an amount of 50 mass% or more by heat treatment in a short time at about 200°C) as a high-temperature volatile wax-based lubricant was applied (application amount: about 50 mg/m² per surface) to both surfaces of the coated metal sheet prepared by the above method, and then punched into a circle having a diameter of 142 mm to prepare a shallow drawn cup. Next, the shallow drawn cup was subjected to re-drawing, ironing (three stages), and doming using a punch (with temperature control) with an outer diameter of Φ66 mm under dry conditions. Thereafter, an oven was used to perform heat treatment at 201°C for 75 seconds to obtain a drawn and wall-ironed can [can diameter: 66 mm, height: approximately 130 mm, capacity: approximately 370 ml, total drawn ratio: 2.15, ironed rate: 61%, thickness of central portion of can trunk/thickness of central portion of can bottom × 100 = approximately 40%, thickness of metal substrate of central portion of can trunk/thickness of metal substrate of central portion of can bottom × 100 = approximately 40%, thickness of inner surface coating film of central portion of can trunk/thickness of inner surface coating film of central portion of can bottom × 100 = approximately 39%, mass (film thickness) of inner surface coating film of central portion of can bottom: 86 mg/dm² (approximately 6.3 µm), thickness of inner surface coating film of central portion of can bottom/thickness of metal substrate of central portion of can bottom = approximately 0.024, thickness of inner surface coating film of central portion of can trunk/thickness of metal substrate of central portion of can trunk = approximately 0.023]. The paraffin wax was volatilized and removed in and amount of at least 90 mass% by the heat treatment at 201°C for 75 seconds.

For coating film characteristics obtained in the inner surface coating composition and the outer surface coating composition used in each experimental example, tests were conducted in accordance with the following test methods.

### Gel Fraction (A)

An isolated coating film sample for measurement was prepared as described below using the inner surface coating composition or the outer surface coating composition used in each experimental example. So that coating conditions were the same as the coating conditions (coating material type, dry coating film mass, drying and baking conditions) of the inner surface coating film or outer surface coating film in the coated metal sheet of each experimental example, each inner surface coating composition and outer surface coating composition were coated on a phosphoric acid chromate-based surface-treated aluminum sheet (3104 alloy, sheet thickness: 0.27 mm) with a bar coater, drying was performed at 120°C, and baking was then performed at 250°C for 30 seconds to form the coated metal sheet. A test piece having a size of 5 cm × 5 cm was cut out from the coated metal sheet and immersed in a diluted hydrochloric acid aqueous solution to dissolve the aluminum sheet (metal substrate). Subsequently, the film-shaped isolated coating film was taken out, sufficiently washed with distilled water, and dried to obtain an isolated coating film sample for measurement. After the mass (W1) of the sample was measured, the sample was immersed in 30 ml of MEK (methyl ethyl ketone) at ordinary temperature (20°C) for 1 hour. Thereafter, the solvent-insoluble matter (gelled matter) of the sample was taken out to an aluminum petri dish, dried at 120°C for 30 minutes, and cooled to room temperature. Thereafter, the total mass (W2') of the solvent-insoluble matter of the aluminum petri dish and the sample after drying was measured, and the mass (W0) of the aluminum petri dish measured in advance was subtracted therefrom to determine the mass (W2 = W2' - WO) of the solvent-insoluble matter (gelled matter) of the sample after drying. The gel fraction (A) (%) of the inner surface coating film and the outer surface coating film of the coated metal sheet is determined by the following Formula (1). The results are shown in Table 2. $Gel fraction \left(A\right) \left(%\right) = 100 \times W 2 / W 1$

In the case of obtaining a measurement sample from a coated metal sheet or a drawn and wall-ironed can having coating films formed on both surfaces, an isolated coating film sample for measurement can be obtained by cutting out a test piece, then removing the coating film on one side where measurement is not performed by scraping with sandpaper or the like, and then dissolving the metal substrate by the above-described method or the like. Alternatively, a test piece is cut out from a coated metal sheet or the can bottom portion of a drawn and wall-ironed can, immersed in a boiled aqueous hydrogen peroxide solution for several minutes, sufficiently washed with distilled water, and then the film-like coating film is peeled off from the metal substrate and dried to obtain an isolated coating film sample for measurement.

### Gel Fraction (A) of Can Bottom Inner Surface Coating Film

For the drawn and wall-ironed can of Experimental Example 1 that was molded as described in the above "Production of Drawn and Wall-ironed Can" and subjected to heat treatment at 201°C for 75 seconds, the gel fraction (A) of the inner surface coating film of the can bottom was measured. The method for preparing an isolated coating film sample for measurement is as follows.

The can bottom portion was cut out from the can bottom of the drawn and wall-ironed can after the heat treatment to have a dimension of 30 mm in a direction of 0° and 30 mm in a direction of 90° with respect to the metal substrate rolling direction, about the central portion of the can bottom. The cut sample was immersed in boiled hydrogen peroxide water for 2 to 3 minutes and sufficiently washed with distilled water, and then the coating film on the inner surface side of the can was peeled off from the metal substrate and dried to obtain an isolated coating film sample for measurement.

The measurement of the gel fraction (A) was performed in the same manner as the measurement method described in the section of "Gel Fraction (A)" above. Results are shown below.

### Gel fraction (A) of inner surface coating film of can bottom of drawn and wall-ironed can of Experimental Example 1: 61%

### Gel Fraction (B)

A measurement sample was prepared as described below using the inner surface coating composition or the outer surface coating composition used in each experimental example. So that coating conditions are the same as the coating conditions (coating material type, dry coating film mass, drying and baking conditions) of the inner and outer surface coating films in the coated metal sheet of each experimental example, each inner surface coating composition and outer surface coating composition were coated on a phosphoric acid chromate-based surface-treated aluminum sheet (3104 alloy, sheet thickness: 0.27 mm) with a bar coater, drying was performed at 120°C, and baking was then performed at 250°C for 30 seconds to form the coated metal sheet.

A test piece having a size of 5 cm × 5 cm was cut out from the coated metal sheet, and the mass of the test piece using this as a measurement sample was measured (W3). Then, using 400 ml of MEK (methyl ethyl ketone), the test piece was immersed in boiling MEK (under reflux at 80°C) for 1 hour, and MEK extraction was performed at a boiling point for 1 hour. After the test piece after extraction was washed with MEK, the test piece was dried at 120°C for 30 minutes, and the mass of the test piece after extraction (W4) was measured. Further, the coating film was peeled off and removed by a decomposition method with concentrated sulfuric acid, washing and drying were performed, and the mass of the test piece (W5) was measured. The gel fraction (B) (%) of the inner surface coating film and the outer surface coating film of the coated metal sheet is determined by the following Formula (2). The results are shown in Table 2. $Gel fraction \left(B\right) \left(%\right) = 100 \times \left(W4-W5\right) / \left(W3-W5\right)$

When a measurement sample is obtained from a coated metal sheet or a drawn and wall-ironed can (can bottom or the like) having coating films formed on both surfaces, the gel fraction (B) can be measured by the above method after cutting out a test piece and then removing the coating film on one side where measurement is not performed by scraping with sandpaper or the like.

The coated metal sheet and the drawn and wall-ironed can obtained in each experimental example were evaluated according to the following test method.

### Evaluation of Temporal Embrittlement Resistance

Initial processability and temporal processability were evaluated as the evaluation of temporal embrittlement resistance. The processability was evaluated according to the following bending test method.

A coated metal sheet for evaluation was produced as described below using the inner surface coating composition used in experimental examples. So that coating conditions are the same as the coating conditions (coating material type, dry coating film mass, drying and baking conditions) of the inner surface coating film in each experimental example, the composition was coated on each phosphoric acid chromate-based surface-treated aluminum sheet (3104 alloy, sheet thickness: 0.27 mm) with a bar coater, drying was performed at 120°C for 60 seconds, and baking was then performed at 250°C for 30 seconds to form the coated metal sheet for evaluation. This coated metal sheet was cut into a size of 3.5 × 3 cm so that the rolled direction of the aluminum sheet was the long side. Then, this test piece was bent parallel to the short side so that the surface coated with the inner surface coating composition of this test piece was on the outside. After two aluminum sheets (3104 alloys, sheet thickness: 0.27 mm) were interposed as spacers inside the bent portion, a 3 kg weight was dropped from a height of 40 cm at room temperature (20°C) to perform bending. A width of 2 cm at the bent tip portion was brought into contact with a sponge immersed in a 1% sodium chloride aqueous solution, and a current value (ERV) was measured after applying a voltage of 6.3 V for 4 seconds at room temperature.

Initial processability: The coated metal sheet for evaluation was evaluated within 2 days after preparation.

Temporal processability: The coated metal sheet for evaluation was evaluated in the same manner as in the initial processability after the sheet was stored in a thermostat at 40°C for 1 month after preparation.

The evaluation criteria for both the initial processability and the temporal processability are as follows. The results are shown in Table 2.
Excellent: less than 0.5 mA
Good: 0.5 mA or more and less than 1.0 mA
Marginal: 1.0 mA or more and less than 3 mA
Poor: 3 mA or more

### Evaluation of Aroma Sorption Resistance (Aroma Component Sorption Test)

Evaluation of the aroma sorption resistance was performed as described below by using the drawn and wall-ironed can after molded as described in the above "Production of Drawn and Wall-ironed Can" and subjected to heat treatment at 201°C for 75 seconds.

A predetermined number of test pieces each with a size of 2.5 cm × 5 cm were cut out about a position of 8.0 cm high from the can bottom of the drawn and wall-ironed can, the coating film on the outer surface side (outer surface coating film) was scraped with sandpaper (abrasive paper), and the resulting test piece was cleaned and dried. A 5% aqueous ethanol solution containing 2 ppm of limonene was prepared as a model flavor test solution. The model flavor test solution was placed in a glass bottle with a packing (Duran bottle), the predetermined number of test pieces were immersed therein, and the glass bottle was sealed and stored for 2 weeks at 30°C. The test piece was taken out of the glass bottle, and after washing with water, water droplets were removed, the test piece was immersed in 50 mL of diethyl ether, sealed, and stored at room temperature round the clock. The resulting extraction liquid was concentrated in a concentrating device and GC-MS analysis (gas chromatography mass spectrometry) was performed. A component peak derived from limonene obtained from the GC-MS analysis was used to determine a sorption amount by a calibration curve, and a ratio with respect to a charged amount of limonene was determined as a limonene sorption rate (%) by the following Formula (10). 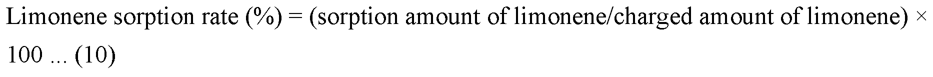 Limonene sorption rate (%) = (sorption amount of limonene/charged amount of limonene) × 100

The evaluation criteria of Experimental Examples 1, 3, 4, 7, 8, 9, 10, and 12 are as follows. The number of test pieces immersed in the test solution was 8 for evaluation. The results are shown in Table 2.
Excellent: Limonene sorption rate is less than 4%
Good: Limonene sorption rate is 4% or more and less than 6%
Marginal: Limonene sorption rate is 6% or more and less than 9%
Poor: Limonene sorption rate is 9% or more

Evaluation criteria of Experimental Example 15 to 23 are as follows. The number of test pieces immersed in the test solution was 1 for evaluation. The results are shown in Table 3.
Excellent: Limonene sorption rate is less than 0.9%
Good: Limonene sorption rate is 0.9% or more and less than 1.1%
Marginal: Limonene sorption rate is 1.1% or more and less than 1.3%
Poor: Limonene sorption rate is 1.3% or more

### Evaluation of Coating Film Covering Property at Inner Surface (ERV Evaluation)

An evaluation of coating film covering property at the inner surface was performed as described below, for the drawn and wall-ironed can subjected to drawing/ironing and doming as described in the above "Production of Drawn and Wall-ironed Can" (indicated as "without heat treatment" in the table), and the drawn and wall-ironed can further subjected to heat treatment at 201°C for 75 seconds in an oven (indicated as "with heat treatment" in the table). An average processing speed during ironing (average moving speed of the punch during ironing) was set to around 5500 mm/sec.

A metal exposed portion was formed on the outer surface side of the can bottom of the drawn and wall-ironed can, the can body was connected to the anode electrode of an enamel rater, while 360 mL of 1% salt solution was poured into the can and the cathode electrode of the enamel rater was immersed in the salt solution filled in the can. Then, a current value (ERV) after applying a voltage of 6.3 V for 4 seconds at ordinary temperature (20°C) was measured.

Evaluation criteria are as follows:
Excellent: Current value of less than 50 mA (less than 0.18 mA/cm²)
Good: Current value of 50 mA or more and less than 200 mA (0.18 mA/cm² or more and less than 0.70 mA/cm²)
Marginal: Current value of 200 mA or more and less than 700 mA (0.70 mA/cm² or more and less than 2.50 mA/cm²)
Poor: Current value of 700 mA or more (2.50 mA/cm² or more)

### Evaluation of Coating Film Peeling Resistance

Evaluation of the coating film peeling resistance was performed by observing presence or absence of peeling of the inner surface coating film in the can trunk portion, for the drawn and wall-ironed can after molded as described in the above "Production of Drawn and Wall-ironed Can" and subjected to heat treatment at 201°C for 75 seconds.

Evaluation criteria are as follows:
Good: No coating film peeling is observed.
Marginal: Slight coating peeling is observed at a site that is thinned by harsh processing in can trunk side wall.
Poor: Coating peeling is observed in a wide range of the site that is thinned by harsh processing in can trunk side wall.

### Heat Shrinkage Rate Evaluation

Evaluation of the heat shrinkage rate was performed as described below using the inner surface coating film at the central portion of the can trunk of the drawn and wall-ironed can of Experimental Example 1 and Experimental Example 15 subjected to drawing and ironing and doming as described in the above "Production of Drawn and Wall-ironed Can" (without heat treatment) and the drawn and wall-ironed can of Experimental Example 1 and Experimental Example 15 further subjected to heat treatment at 201°C for 75 seconds in an oven (with heat treatment).

The above drawn and wall-ironed can was used to cut out a sample of 10 mm in the can trunk circumferential direction and 20 mm in the can height direction about the central portion of the can trunk (thinnest portion) in a direction of 0° with respect to the metal substrate rolling direction. The coating film on the can outer surface side was removed by scraping with sandpaper or the like to exposure the metal surface, and then immersed in the diluted hydrochloric acid aqueous solution to dissolve the metal substrate. Next, the inner surface coating film on the can inner surface side having a film shape was taken out, sufficiently washed with distilled water and dried, and the resulting film-shaped coating film was cut out to 20 mm long (can height direction) and 4 mm wide (can trunk circumferential direction) to obtain the measurement sample.

The measurement sample was chucked in a thermomechanical analyzer, and the inter-chuck distance (corresponding to the initial length of the measurement portion in the height direction of the coating film) was set to 5 mm. The displacement amount of the measurement sample was measured under the following conditions, and the heat shrinkage rate in the can height direction was evaluated in a loaded state and an unloaded state:
Instrument: TMA/SS6100, available from Seiko Instruments Inc.
Temperature rise rate: 5°C/min
Temperature range: from 30°C to 200°C
Measurement mode: tensile mode
Load in measurement: 5 mN (5.20 × 10⁵ N/m²) or no load
Inter-chuck distance: 5 mm

The inter-chuck distance before measurement (corresponding to the initial length of the measurement portion of the coating film) was defined as L₀, the maximum value of the shrinkage amount (maximum shrinkage length) in the height direction of a portion corresponding to L₀ when the temperature was raised from 30°C to 200°C at a temperature rise rate of 5°C/min while applying a load of 5.20 × 10⁵ N/m₂ per unit area was defined as ΔL₁, and a value calculated by the mathematical formula represented by the following Formula (5) was defined as the heat shrinkage rate (with load). Note that for the displacement amount, shrinkage was defined as a positive value, and expansion or elongation was defined as a negative value. The results are shown below. $Heat shrinkage rate \left(with load\right) = \left({ΔL}_{1}/{L}_{0}\right) \times 100 \left(%\right)$
Heat shrinkage rate of inner surface coating film of drawn and wall-ironed can of Experimental Example 1 (without heat treatment) (with load): 83%
Heat shrinkage rate of inner surface coating film of drawn and wall-ironed can of Experimental Example 1 (with heat treatment) (with load): 2%
Heat shrinkage rate of inner surface coating film of drawn and wall-ironed can of Experimental Example 15 (without heat treatment) (with load): 68%
Heat shrinkage rate of inner surface coating film of drawn and wall-ironed can of Experimental Example 15 (with heat treatment) (with load): 8%

In addition, the inter-chuck distance before measurement (corresponding to the initial length of the measurement portion of the coating film) was defined as L₀, the maximum value of the shrinkage amount (maximum shrinkage length) in the height direction of a portion corresponding to L₀ when the temperature was raised from 30°C to 200°C at a temperature rise rate of 5°C/min in an unloaded state was defined as ΔL₂, and a value calculated by the mathematical formula represented by the following Formula (6) was defined as the heat shrinkage rate (without load). Note that for the displacement amount, shrinkage was defined as a positive value, and expansion or elongation was defined as a negative value. The results are shown below. $Heat shrinkage rate \left(without load\right) = \left({ΔL}_{2}/{L}_{0}\right) \times 100 \left(%\right)$
Heat shrinkage rate of inner surface coating film of drawn and wall-ironed can of Experimental Example 1 (without heat treatment) (without load): 79%
Heat shrinkage rate of inner surface coating film of drawn and wall-ironed can of Experimental Example 1 (with heat treatment) (without load): 19%
Heat shrinkage rate of inner surface coating film of drawn and wall-ironed can of Experimental Example 15 (without heat treatment) (with load): 69%
Heat shrinkage rate of inner surface coating film of drawn and wall-ironed can of Experimental Example 15 (with heat treatment) (without load): 30%

### Corrosion Resistance Evaluation

Evaluation of corrosion resistance was performed as described below for the inner surface coating film at the central portion of the can trunk of the drawn and wall-ironed can of Experimental Example 1 and Experimental Example 15 subjected to drawing and ironing and doming as described in the above "Production of Drawn and Wall-ironed Can" (without heat treatment) and the drawn and wall-ironed can of Experimental Example 1 and Experimental Example 15 further subjected to heat treatment at 201°C for 75 seconds in an oven (with heat treatment).

The above drawn and wall-ironed can was used to cut out a test piece of 40 mm in the can trunk circumferential direction and 40 mm in the can height direction about the central portion of the can trunk (thinnest portion). A cross-cut flaw having a length of 4 cm and reaching the base metal was made into the test piece using a cutter, the test piece was immersed in an acidic model liquid containing salt. The test piece was then left to stand for 2 weeks at 37°C and then the corrosion state was evaluated. The model liquid used in the test was prepared in such a manner that salt was 0.2% and citric acid was added thereto to adjust the pH to 2.5. For the evaluation criteria, around the cross-cut portion, a test piece having a maximum width of corrosion under the coating film of 1.5 mm or more was evaluated as Poor, a test piece having a maximum width of corrosion of 0.5 mm or more and less than 1.5 mm was evaluated as Good, and a test piece having a maximum width of corrosion of less than 0.5 mm was evaluated as Excellent. The results are shown below.
Corrosion state of drawn and wall-ironed can of Experimental Example 1 (without heat treatment): Poor
Corrosion state of drawn and wall-ironed can of Experimental Example 1 (with heat treatment): Excellent
Corrosion state of drawn and wall-ironed can of Experimental Example 15 (without heat treatment): Poor
Corrosion state of drawn and wall-ironed can of Experimental Example 15 (with heat treatment): Excellent

Table 1 shows the characteristics (monomer composition, Tg, and the like) of the polyester resin used in each experimental example, and Tables 2 and 3 show the formulation of the inner surface coating composition and the outer surface coating composition, the coating film properties (gel fraction) of the inner surface coating film, and the evaluation results.

**[Table 1]**

| Polyester resin | Polyester resin monomer composition | | | | | | | | | Polyester resin property value | | |
|---|---|---|---|---|---|---|---|---|---|---|---|---|
| | Polyvalent carboxylic acid component (mol%) | | | | Polyhydric alcohol component (mol%) | | | | | Tg (°C) | Acid value (mgKOH/g) | Number average molecular weight |
| | Aromatic dicarboxylic acid | | Trimellitic acid | Sebacic acid | Ethylene glycol | Propylene glycol | Neopentyl glycol | 1,4-Cyclohexanedimethanol | 2-Methyl-1,3-propanediol | | | |
| | Terephthalic acid | Isophthalic acid | | | | | | | | | | |
| A | 99.8 | | 0.2 | | 27.4 | 72.6 | | | | 84 | 4 | 18,000 |
| B | 92.2 | 7.6 | 0.2 | | 25 | 65 | | 3 | 7 | 81 | 3 | 18,000 |
| C | 97.8 | | 0.4 | 1.8 | 26.8 | 73.2 | | | | 79 | 4 | 18,000 |
| D | 95.8 | | 0.6 | 3.6 | 26 | 74 | | | | 74 | 4 | 17,000 |
| E | 93.8 | | 0.8 | 5.4 | 25.4 | 74.6 | | | | 70 | 4 | 17,000 |
| F | 95.1 | 4.8 | 0.1 | | 29 | 71 | | | | 83 | 4 | 18,000 |
| G | 92.7 | 7.2 | 0.1 | | 29.3 | 70.7 | | | | 82 | 4 | 18,000 |
| H | 87.7 | 11.9 | 0.4 | | 23.3 | 61.7 | | 5.5 | 9.5 | 79 | 4 | 18,000 |
| I | 83.7 | 15.8 | 0.5 | | 21.9 | 58.1 | | 7.4 | 12.6 | 78 | 4 | 18,000 |
| J | 78.2 | 21.6 | 0.2 | | 33 | 67 | | | | 79 | 4 | 18,000 |
| K | 19.2 | 79.2 | 1.6 | | | | | 36.8 | 63.2 | 56 | 5 | 16,000 |
| L | 100 | | | | 28 | 72 | | | | 84 | 2 | 18,000 |
| M | 76 | 24 | | | 34 | 66 | | | | 79 | 2 | 18,000 |
| N | 49.3 | 50.6 | 0.1 | | 45.6 | | 54.4 | | | 65 | 2 | 20,000 |
| O | 83.8 | 16.1 | 0.1 | | 31.6 | 68.4 | | | | 80 | 4 | 18,000 |
| P | 89.1 | 10.8 | 0.1 | | 30.3 | 69.7 | | | | 82 | 4 | 18,000 |
| Q | 27.1 | 71.3 | 1.6 | | 2.5 | 7.5 | | 33 | 57 | 58 | 7 | 16,000 |
| R | 77.6 | 19.2 | 0.2 | 2.9 | 32.3 | 67.7 | | | | 72 | 6 | 18,000 |
| S | 72 | 21.8 | 0.2 | 6.0 | 39.8 | 49.6 | 10.6 | | | 61 | 6 | 16,000 |

**[Table 2]**

| | | | | | Experimental Example | | | | | | | | | | | | | |
|---|---|---|---|---|---|---|---|---|---|---|---|---|---|---|---|---|---|---|
| | | | | | 1 | 2 | 3 | 4 | *5* | 6 | 7 | 8 | 9 | 10 | 11* | 12 | 13** | 14** |
| Inner surface coating composition | Polyester resin | Type | Tg (°C) | Amount of isophthalic acid (mol%) | | | | | | | | | | | | | | |
| | | A | 84 | 0 | 100 | | | | | | | | | | | | | |
| | | B | 81 | 7.6 | | 100 | | | | | | | | | | | | |
| | | C | 79 | 0 | | | 100 | | | 100 | | | | | 100 | | | |
| | | D | 74 | 0 | | | | 100 | | | | | | | | | | |
| | | E | 70 | 0 | | | | | 100 | | | | | | | | | |
| | | F | 83 | 4.8 | | | | | | | 100 | | | | | | | |
| | | G | 82 | 7.2 | | | | | | | | 100 | | | | | | |
| | | H | 79 | 11.8 | | | | | | | | | 100 | | | | | |
| | | I | 78 | 15.8 | | | | | | | | | | 100 | | | | |
| | | J | 79 | 21.6 | | | | | | | | | | | | 100 | 100 | |
| | | K | 56 | 79.2 | | | | | | | | | | | | | | 100 |
| | Curing agent | Resol-type phenolic resin | | | 10 | 10 | 10 | 10 | 10 | 6 | 10 | 10 | 10 | 10 | | 10 | | 10 |
| | | Benzoguanamine resin A | | | | | | | | | | | | | 15 | | | |
| | | Melamine resin | | | | | | | | | | | | | | | 6 | |
| | Acid catalyst | Dodecylbenzenesulfonic acid | | | 0.1 | 0.1 | 0.1 | 0.1 | 0.1 | 0.1 | 0.1 | 0.1 | 0.1 | 0.1 | 0.1 | 0.1 | 0.1 | 0.1 |
| | Coating film characteristics | Gel fraction (A) (%) | | | 62 | 63 | 64 | 64 | 59 | *56* | 68 | 69 | 70 | 72 | 72 | 62 | 92 | 93 |
| | | Gel fraction (B) (%) | | | 90 | 89 | 88 | 90 | 88 | 80 | 90 | 89 | 91 | 90 | 75 | 91 | 93 | 97 |
| | | Difference (%) between gel fractions (A) and (B) | | | 28 | 26 | 24 | 26 | 29 | 24 | 22 | 20 | 21 | 18 | 3 | 29 | 1 | 4 |
| Outer surface coating composition | Polyester resin | Type | Tg (°C) | Content of isophthalic acid (mol%) | | | | | | | | | | | | | | |
| | | L | 84 | 0 | 100 | 100 | 100 | 100 | 100 | 100 | | | | 100 | 100 | | | |
| | | M | 79 | 24 | | | | | | | 100 | 100 | 100 | | | 100 | 100 | 100 |
| | Curing agent | Benzoguanamine resin A | | | 3 | 3 | 3 | 3 | 3 | 3 | 3 | 15 | | 3 | 3 | 25 | | 7.8 |
| | | Melamine resin | | | 3 | 3 | 3 | 3 | 3 | 3 | 3 | | 3 | 3 | 3 | | 5.5 | |
| | Acid catalyst | Dodecylbenzenesulfonic acid | | | 0.1 | 0.1 | 0.1 | 0.1 | 0.1 | 0.1 | 0.1 | 0.1 | 0.1 | 0.1 | 0.1 | 0.1 | 0.1 | 0.5 |
| | Coating film characteristics | Gel fraction (A) (%) | | | 80 | 80 | 80 | 80 | 80 | 80 | 84 | 79 | 81 | 80 | 80 | 91 | 90 | 15 |
| | | Gel fraction (B) (%) | | | 82 | 82 | 82 | 82 | 82 | 82 | 81 | 77 | 78 | 82 | 82 | 97 | 90 | 5 |
| | | Difference (%) between gel fractions (A) and (B) | | | 2 | 2 | 2 | 2 | 2 | 2 | 3 | 2 | 3 | 2 | 2 | 6 | 0 | 10 |
| Evaluation | Temporal embrittlement resistance | | | Initial processability | Excellent | Excellent | Excellent | Excellent | Excellent | Excellent | Excellent | Excellent | Excellent | Excellent | Excellent | Good | - | - |
| | | | | Temporal processability | Excellent | Excellent | Excellent | Excellent | Good | Excellent | Excellent | Excellent | Excellent | Excellent | Excellent | Poor | - | - |
| | Aroma sorption resistance | | | | Marginal | - | Marginal | Marginal | - | - | Good | Good | Excellent | Excellent | - | Excellent | - | - |
| | Coating film peeling resistance | | | Inner surface | Good | Good | Good | Good | Good | Good | Good | Good | Good | Good | Good | Good | Poor | Poor |
| | | | | Outer surface | Good | Good | Good | Good | Good | Good | Good | Good | Good | Good | Good | Poor | Poor | Good |
| | Coating film covering property at inner surface (ERV) | | | Without heat treatment | Good | Good | Excellent | Excellent | Excellent | Excellent | - | - | - | - | - | Excellent | - | - |
| | | | | With heat treatment | Good | Good | Excellent | Excellent | Excellent | Excellent | - | - | - | - | - | Excellent | - | - |

| | | | | | | | | | | | | | | | | | | |
|---|---|---|---|---|---|---|---|---|---|---|---|---|---|---|---|---|---|---|
| * Reference Example for coated metal sheet embodiment ** Reference Example for seamless can and coated metal sheet embodiments - Not evaluated | | | | | | | | | | | | | | | | | | |

**[Table 3]**

| | | | | | Experimental Example | | | | | | | | |
|---|---|---|---|---|---|---|---|---|---|---|---|---|---|
| | | | | | 15 | 16 | 17 | 18 | 19* | 20 | 21 | 22* | 23 |
| Inner surface coating composition | Polyester resin | Type | Tg (°C) | Amount of isophthalic acid (mol%) | | | | | | | | | |
| | | J | 79 | 21.6 | 100 | | | | | | | 100 | |
| | | N | 65 | 50.6 | | 100 | | | | | | | |
| | | O | 80 | 16.1 | | | 100 | | | | | | |
| | | P | 82 | 10.8 | | | | 100 | | | | | |
| | | Q | 58 | 71.3 | | | | | 100 | | | | |
| | | R | 72 | 19.2 | | | | | | 100 | | | |
| | | S | 61 | 21.8 | | | | | | | 100 | | |
| | | A | 84 | 0 | | | | | | | | | 100 |
| | Curing agent | Resol-type phenolic resin | | | 10 | 10 | 10 | 10 | 10 | 10 | 10 | | 10 |
| | | Benzoguanamine resin B | | | | | | | | | | 15 | |
| | Acid catalyst | Dodecylbenzenesulfonic acid | | | 0.1 | 0.1 | 0.1 | 0.1 | 0.1 | 0.1 | 0.1 | 0.1 | 0.1 |
| | Coating film characteristics | Gel fraction (A) (%) | | | 62 | 63 | 63 | 71 | 85 | 62 | - | 72 | 62 |
| | | Gel fraction (B) (%) | | | 91 | 88 | 90 | 89 | 92 | 91 | 80 | 77 | 90 |
| | | Difference (%) between gel fractions (A) and (B) | | | 29 | 25 | 27 | 18 | 7 | 29 | - | 5 | 28 |
| Outer surface coating composition | Polyester resin | Type | Tg (°C) | Amount of isophthalic acid (mol%) | | | | | | | | | |
| | | M | 79 | 24 | 100 | 100 | 100 | 100 | 100 | 100 | 100 | 100 | 100 |
| | Curing agent | Benzoguanamine resin A | | | 3 | 3 | 3 | 3 | 3 | 3 | | 15 | 25 |
| | | Melamine resin | | | 3 | 3 | 3 | 3 | 3 | 3 | 3 | | |
| | Acid catalyst | Dodecylbenzenesulfonic acid | | | 0.1 | 0.1 | 0.1 | 0.1 | 0.1 | 0.1 | 0.1 | 0.1 | 0.1 |
| | Coating film characteristics | Gel fraction (A) (%) | | | 84 | 84 | 84 | 84 | 84 | 84 | 81 | 79 | 91 |
| | | Gel fraction (B) (%) | | | 81 | 81 | 81 | 81 | 81 | 81 | 78 | 77 | 97 |
| | | Difference (%) between gel fractions (A) and (B) | | | 3 | 3 | 3 | 3 | 3 | 3 | 3 | 2 | 6 |
| Evaluation | | Aroma sorption resistance | | | Excellent | Excellent | Good | Marginal | Good | Good | Marginal | Good | Poor |
| | | Coating film peeling resistance | | Inner surface | Good | Good | Good | Good | Marginal | Good | Good | Good | Good |
| | | | | Outer surface | Good | Good | Good | Good | Good | Good | Good | Good | Poor |
| | | Coating film covering property at inner surface (ERV) | | Without heat treatment | Excellent | Excellent | Excellent | Excellent | Excellent | Excellent | Excellent | Excellent | Good |
| | | | | With heat treatment | Excellent | Excellent | Excellent | Excellent | Marginal | Excellent | Excellent | Excellent | Good |

| | | | | | | | | | | | | | |
|---|---|---|---|---|---|---|---|---|---|---|---|---|---|
| * Reference Example for coated metal sheet embodiment - Not evaluated | | | | | | | | | | | | | |

### Industrial Applicability

The seamless can such as a drawn and wall-ironed can of the present invention is molded from a coated metal sheet having an inner surface coating film that is free from coating film peeling during heat treatment after molding, effectively prevents metal exposure, has an excellent coating film covering property and corrosion resistance, and is excellent in temporal embrittlement resistance and/or aroma sorption resistance, and thus can be suitably used for a beverage container or the like containing an aroma component as a content. In addition, the coated metal sheet for a seamless can of the present invention has excellent coating film peeling resistance in which coating film peeling does not occur even during heat treatment after molding, and has an inner surface coating film excellent in temporal embrittlement resistance and/or aroma sorption resistance during molding, and thus can be suitably used for producing a seamless can.

## Claims

1. A seamless can comprising an inner surface coating film at least on a can inner surface side, wherein
when the inner surface coating film contains a non-crystalline polyester resin (no clear melting point of a crystalline component is exhibited in measurement by a differential scanning calorimeter) and a total amount of polyvalent carboxylic acid components in the non-crystalline polyester resin is 100 mol%, a content of an aromatic dicarboxylic acid is 70 mol% or more, and
the inner surface coating film has a gel fraction (A) represented by Formula (1a) below of less than 90%: $Gel fraction \left(A\right) = \left(W2a/W1a\right) \times 100 \left(%\right)$
where W1a represents a mass of the inner surface coating film isolated from a coated metal substrate cut out from the seamless can, and W2a represents a mass of the isolated inner surface coating film after being immersed in methyl ethyl ketone at a temperature of 20°C ± 5°C for 60 minutes and then taken out and dried.

2. The seamless can according to claim 1, wherein the inner surface coating film has a gel fraction (B) represented by Formula (2a) below higher than the gel fraction (A) by 10% or more: $Gel fraction \left(B\right) = \left[\left(W4a-W5a\right)/\left(W3a-W5a\right)\right] \times 100 \left(%\right)$ where W3a represents a mass of a coated metal substrate cut out from the seamless can and having the inner surface coating film formed thereon, W4a represents a mass of the coated metal substrate after being immersed in methyl ethyl ketone at 80°C for 60 minutes and then taken out and dried, and W5a represents a mass of a metal substrate after the inner surface coating film is removed from the coated metal substrate.

3. The seamless can according to claim 1 or 2, wherein the inner surface coating film contains a resol-type phenolic resin and/or an amino resin as a curing agent.

4. The seamless can according to any one of claims 1 to 3, wherein a content of isophthalic acid in the non-crystalline polyester resin is less than 21 mol%.

5. The seamless can according to claim 4, wherein, when the total amount of polyvalent carboxylic acid components in the non-crystalline polyester resin is 100 mol%, a content of terephthalic acid is 60 mol% or more.

6. The seamless can according to claim 4 or 5, wherein, when the total amount of polyvalent carboxylic acid components in the non-crystalline polyester resin is 100 mol%, the content of isophthalic acid is 2 mol% or more and less than 21 mol%.

7. The seamless can according to any one of claims 1 to 3, wherein a content of isophthalic acid in the non-crystalline polyester resin is 4 mol% or more.

8. The seamless can according to any one of claims 1 to 7, wherein:
(a) a thickness of a central portion of a can trunk is from 20 to 75% of a thickness of a central portion of a can bottom, and a thickness of the inner surface coating film at the central portion of the can trunk is from 20 to 75% of a thickness of the inner surface coating film at the central portion of the can bottom; and/or
(b) a thickness ratio of the inner surface coating film to a metal substrate (thickness of the inner surface coating film/thickness of the metal substrate) is substantially identical in a can bottom portion and a can trunk portion.

9. The seamless can according to any one of claims 1 to 8, further comprising an outer surface coating film on a can outer surface side, the outer surface coating film comprising a non-crystalline polyester resin and an amino resin as a curing agent.

10. The seamless can according to claim 9, wherein the outer surface coating film has a gel fraction (A) represented by Formula (3a) below of less than 90%: $Gel fraction \left(A\right) = \left(W7a/W6a\right) \times 100 \left(%\right)$ where W6a represents a mass of the outer surface coating film isolated from a coated metal substrate cut out from the seamless can, and W7a represents a mass of the isolated outer surface coating film after being immersed in methyl ethyl ketone at a temperature of 20°C ± 5°C for 60 minutes and then taken out and dried.

11. The seamless can according to any one of claims 1 to 10, wherein a heat shrinkage rate of the inner surface coating film at a central portion of a can trunk represented by Formula (5) below is 30% or less: $Heat shrinkage rate \left(%\right) = \left({ΔL}_{1}/{L}_{0}\right) \times 100$ where L₀ is an initial length of the coating film isolated from the central portion of the can trunk in a height direction, and ΔL₁ is a maximum shrinkage amount of the coating film of a portion corresponding to L₀ in the height direction when the temperature is raised from 30°C to 200°C at a temperature rise rate of 5°C/min while applying a load of 5.20 × 10⁵N/m₂ per unit area.

12. The seamless can according to any one of claims 1 to 11, wherein a heat shrinkage rate of the inner surface coating film at a central portion of a can trunk represented by Formula (6) below is 50% or less: $Heat shrinkage rate \left(%\right) = \left({ΔL}_{2}/{L}_{0}\right) \times 100$ where L₀ is an initial length of the coating film isolated from the central portion of the can trunk in a height direction, and ΔL₂ is a maximum shrinkage amount of the coating film of a portion corresponding to L₀ in the height direction when the temperature is raised from 30°C to 200°C at a temperature rise rate of 5°C/min in an unloaded state.

13. The seamless can according to any one of claims 1 to 12, wherein a covering degree of the inner surface coating film, measured according to the "Evaluation of Coating Film Covering Property at Inner Surface" method of the description, is less than 200 mA in terms of Enamel rater value (ERV).

14. A coated metal sheet for a seamless can, the coated metal sheet comprising an inner surface coating film at least on a surface to be a can inner surface after processing, wherein
when the inner surface coating film contains a non-crystalline polyester resin (no clear melting point of a crystalline component is exhibited in measurement by a differential scanning calorimeter) and a resol-type phenolic resin and/or an amino resin as a curing agent and a total amount of polyvalent carboxylic acid components in the non-crystalline polyester resin is 100 mol%, a content of an aromatic dicarboxylic acid is 70 mol% or more,
the inner surface coating film has a gel fraction (A) represented by Formula (1b) below of less than 90%, and
the inner surface coating film has a gel fraction (B) represented by Formula (2b) below higher than the gel fraction (A) by 10% or more: $Gel fraction \left(A\right) \left(%\right) = \left(W2b/W1b\right) \times 100$
where W1b represents a mass of the inner surface coating film isolated from a coated metal substrate cut out from the coated metal sheet, and W2b represents a mass of the isolated inner surface coating film after being immersed in methyl ethyl ketone at a temperature of 20°C ± 5°C for 60 minutes then taken out and dried; $Gel fraction \left(B\right) \left(%\right) = \left[\left(W4b-W5b\right)/\left(W3b-W5b\right)\right] \times 100$
where W3b represents a mass of a coated metal substrate cut out from the coated metal sheet and having the inner surface coating film formed thereon, W4b represents a mass of the coated metal substrate after being immersed in methyl ethyl ketone at 80°C for 60 minutes and then taken out and dried, and W5b represents a mass of a metal substrate after the inner surface coating film is removed from the coated metal substrate.

15. The coated metal sheet according to claim 14, further comprising an outer surface coating film on a surface to be a can outer surface after processing, wherein the outer surface coating film contains a non-crystalline polyester resin and an amino resin as a curing agent, and the outer surface coating film has a gel fraction (A) represented by Formula (3b) below of less than 90%: $Gel fraction \left(A\right) \left(%\right) = \left(W7b/W6b\right) \times 100$ where W6b represents a mass of the outer surface coating film isolated from a coated metal substrate cut out from the coated metal sheet, and W7b represents a mass of the isolated outer surface coating film after being immersed in methyl ethyl ketone at a temperature of 20°C ± 5°C for 60 minutes and then taken out and dried.

16. The coated metal sheet according to claim 14 or 15, wherein a content of isophthalic acid in the non-crystalline polyester resin contained in the inner surface coating film is less than 21 mol%.

17. The coated metal sheet according to any one of claims 14 to 16, wherein a content of isophthalic acid in the non-crystalline polyester resin contained in the inner surface coating film is 4 mol% or more.

## Patentansprüche

1. Nahtlose Dose, die zumindest auf einer Doseninnenflächenseite einen Innenflächenbeschichtungsfilm aufweist, wobei,
wenn der Innenflächenbeschichtungsfilm ein nichtkristallines Polyesterharz enthält (bei der Messung mit einem Differential-Scanning-Kalorimeter wird kein klarer Schmelzpunkt einer kristallinen Komponente angezeigt) und die Gesamtmenge an mehrwertigen Carbonsäurekomponenten in dem nichtkristallinen Polyesterharz 100 mol% beträgt, der Gehalt an einer aromatischen Dicarbonsäure 70 mol% oder mehr beträgt, und
der Innenflächenbeschichtungsfilm eine Gelfraktion (A), dargestellt durch die nachstehende Formel (1a), von weniger als 90 % aufweist: $Gelfraktion \left(A\right) = \left(W2a/W1a\right) \times 100 \left(%\right)$
wobei W1a die Masse des Innenflächenbeschichtungsfilms darstellt, der von einem beschichteten Metallsubstrat isoliert wurde, das aus der nahtlosen Dose ausgeschnitten wurde, und W2a die Masse des isolierten Innenflächenbeschichtungsfilms darstellt, nachdem dieser 60 Minuten lang bei einer Temperatur von 20 °C ± 5 °C in Methylethylketon eingetaucht und anschließend herausgenommen und getrocknet wurde.

2. Nahtlose Dose nach Anspruch 1, wobei der Innenflächenbeschichtungsfilm eine Gelfraktion (B), dargestellt durch die nachstehende Formel (2a), aufweist, die um 10 % oder mehr höher ist als die Gelfraktion (A): $Gelfraktion \left(B\right) = \left[\left(W4a-W5a\right)/\left(W3a-W5a\right)\right] \times 100 \left(%\right)$ wobei W3a die Masse eines beschichteten Metallsubstrats darstellt, das aus der nahtlosen Dose ausgeschnitten wurde und auf dem der Innenflächenbeschichtungsfilm ausgebildet ist, W4a die Masse des beschichteten Metallsubstrats darstellt, nachdem es 60 Minuten lang bei 80 °C in Methylethylketon eingetaucht und anschließend herausgenommen und getrocknet wurde, und W5a die Masse eines Metallsubstrats darstellt, nachdem der Innenflächenbeschichtungsfilm vom beschichteten Metallsubstrat entfernt wurde.

3. Nahtlose Dose nach Anspruch 1 oder 2, wobei der Innenflächenbeschichtungsfilm ein Phenolharz vom Resol-Typ und/oder ein Aminoharz als Härtungsmittel enthält.

4. Nahtlose Dose nach einem der Ansprüche 1 bis 3, wobei der Gehalt an Isophthalsäure im nichtkristallinen Polyesterharz weniger als 21 mol% beträgt.

5. Nahtlose Dose nach Anspruch 4, wobei, wenn die Gesamtmenge an mehrwertigen Carbonsäurekomponenten im nichtkristallinen Polyesterharz 100 mol% beträgt, der Gehalt an Terephthalsäure 60 mol% oder mehr beträgt.

6. Nahtlose Dose nach Anspruch 4 oder 5, wobei, wenn die Gesamtmenge an mehrwertigen Carbonsäurekomponenten im nichtkristallinen Polyesterharz 100 mol% beträgt, der Gehalt an Isophthalsäure 2 mol% oder mehr und weniger als 21 mol% beträgt.

7. Nahtlose Dose nach einem der Ansprüche 1 bis 3, wobei der Gehalt an Isophthalsäure im nichtkristallinen Polyesterharz 4 mol% oder mehr beträgt.

8. Nahtlose Dose nach einem der Ansprüche 1 bis 7, wobei:
(a) die Dicke eines mittleren Abschnitts eines Dosenrumpfs 20 bis 75 % der Dicke eines mittleren Abschnitts des Dosenbodens beträgt und die Dicke des Innenflächenbeschichtungsfilms am mittleren Abschnitt des Dosenrumpfs 20 bis 75 % der Dicke des Innenflächenbeschichtungsfilms am mittleren Abschnitt des Dosenbodens beträgt; und/oder
(b) das Dickenverhältnis des Innenflächenbeschichtungsfilms zum Metallsubstrat (Dicke des Innenflächenbeschichtungsfilms/Dicke des Metallsubstrats) am Abschnitt des Dosenbodens und am Abschnitt des Dosenrumpfs im Wesentlichen identisch ist.

9. Nahtlose Dose nach einem der Ansprüche 1 bis 8, ferner umfassend einen Außenflächenbeschichtungsfilm an der Außenflächenseite der Dose, wobei der Außenflächenbeschichtungsfilm ein nichtkristallines Polyesterharz und ein Aminoharz als Härtungsmittel umfasst.

10. Nahtlose Dose nach Anspruch 9, wobei der Außenflächenbeschichtungsfilm eine Gelfraktion (A), dargestellt durch die nachstehende Formel (3a), von weniger als 90 % aufweist: $Gelfraktion \left(A\right) = \left(W7a/W6a\right) \times 100 \left(%\right)$ wobei W6a die Masse des Außenflächenbeschichtungsfilms darstellt, der von einem beschichteten Metallsubstrat isoliert wurde, das aus der nahtlosen Dose ausgeschnitten wurde, und W7a die Masse des isolierten Außenflächenbeschichtungsfilms darstellt, nachdem dieser 60 Minuten lang bei einer Temperatur von 20 °C ± 5 °C in Methylethylketon eingetaucht und anschließend herausgenommen und getrocknet wurde.

11. Nahtlose Dose nach einem der Ansprüche 1 bis 10, wobei die Wärmeschrumpfungsrate des Innenflächenbeschichtungsfilms an einem mittleren Abschnitt eines Dosenrumpfs, dargestellt durch die nachstehende Formel (5), 30 % oder weniger beträgt: $Wärmeschrumpfungsrate \left(%\right) = \left({ΔL}_{1}/{L}_{0}\right) \times 100$ wobei L₀ die Anfangslänge des Beschichtungsfilms ist, der aus dem mittleren Abschnitt des Dosenrumpfs in Höhenrichtung isoliert wurde, und ΔL₁ der maximale Schrumpfungsbetrag des Beschichtungsfilms eines L₀ entsprechenden Abschnitts in Höhenrichtung ist, wenn die Temperatur von 30 °C auf 200 °C bei einer Temperaturanstiegsrate von 5 °C/min erhöht wird, während eine Belastung von 5,20 × 10⁵ N/m₂ pro Flächeneinheit aufgebracht wird.

12. Nahtlose Dose nach einem der Ansprüche 1 bis 11, wobei die Wärmeschrumpfungsrate des Innenflächenbeschichtungsfilms an einem mittleren Abschnitt eines Dosenrumpfs, dargestellt durch die nachstehende Formel (6), 50 % oder weniger beträgt: $Wärmeschrumpfungsrate \left(%\right) = \left({ΔL}_{2}/{L}_{0}\right) \times 100$ wobei L₀ die Anfangslänge des Beschichtungsfilms ist, der vom mittleren Abschnitt des Dosenrumpfs in Höhenrichtung isoliert wurde, und ΔL₂ der maximale Schrumpfungsbetrag des Beschichtungsfilms eines L₀ entsprechenden Abschnitts in Höhenrichtung ist, wenn die Temperatur im unbelasteten Zustand mit einer Temperaturanstiegsrate von 5 °C/min von 30 °C auf 200 °C erhöht wird.

13. Nahtlose Dose nach einem der Ansprüche 1 bis 12, wobei der Bedeckungsgrad des Innenflächenbeschichtungsfilms, gemessen gemäß dem in der Beschreibung angegebenen Verfahren "Bewertung der Bedeckungseigenschaft des Beschichtungsfilms an der Innenfläche" weniger als 200 mA, ausgedrückt als Enamelrating-Wert (ERV), beträgt.

14. Beschichtetes Metallblech für eine nahtlose Dose, wobei das beschichtete Metallblech einen Innenflächenbeschichtungsfilm zumindest auf einer Oberfläche aufweist, die nach der Verarbeitung eine Doseninnenfläche bildet, wobei
wenn der Innenflächenbeschichtungsfilm ein nichtkristallines Polyesterharz (bei der Messung mit einem Differential-Scanning-Kalorimeter wird kein klarer Schmelzpunkt einer kristallinen Komponente angezeigt) und ein Phenolharz vom Resol-Typ und/oder ein Aminoharz als Härtungsmittel enthält und die Gesamtmenge an mehrwertigen Carbonsäurekomponenten in dem nichtkristallinen Polyesterharz 100 mol% beträgt, der Gehalt an einer aromatischen Dicarbonsäure 70 mol% oder mehr beträgt,
der Innenflächenbeschichtungsfilm eine Gelfraktion (A), dargestellt durch die nachstehende Formel (1b), von weniger als 90 % aufweist; und
der Innenflächenbeschichtungsfilm eine Gelfraktion (B), dargestellt durch die nachstehende Formel (2b), aufweist, die um 10 % oder mehr höher ist als die Gelfraktion (A): $Gelfraktion \left(A\right) \left(%\right) = \left(W2b/W1b\right) \times 100$
wobei W1b die Masse des Innenflächenbeschichtungsfilms darstellt, der von einem beschichteten Metallsubstrat isoliert wurde, das aus dem beschichteten Metallblech ausgeschnitten wurde, und W2b die Masse des isolierten Innenflächenbeschichtungsfilms darstellt, nachdem dieser 60 Minuten lang bei einer Temperatur von 20 °C ± 5 °C in Methylethylketon eingetaucht und anschließend herausgenommen und getrocknet wurde; $Gelfraktion \left(B\right) \left(%\right) = \left[\left(W4b-W5b\right)/\left(W3b-W5b\right)\right] \times 100$
wobei W3b die Masse eines beschichteten Metallsubstrats darstellt, das aus dem beschichteten Metallblech ausgeschnitten wurde und auf dem der Innenflächenbeschichtungsfilm ausgebildet ist, W4b die Masse des beschichteten Metallsubstrats darstellt, nachdem es 60 Minuten lang bei 80 °C in Methylethylketon eingetaucht und anschließend herausgenommen und getrocknet wurde, und W5b die Masse eines Metallsubstrats darstellt, nachdem der Innenflächenbeschichtungsfilm vom beschichteten Metallsubstrat entfernt wurde.

15. Beschichtetes Metallblech nach Anspruch 14, ferner umfassend einen Außenflächenbeschichtungsfilm auf einer Oberfläche, die nach der Verarbeitung eine Dosenaußenfläche bildet, wobei der Außenflächenbeschichtungsfilm ein nichtkristallines Polyesterharz und ein Aminoharz als Härtungsmittel enthält und der Außenflächenbeschichtungsfilm eine Gelfraktion (A), dargestellt durch die nachstehende Formel (3b), von weniger als 90 % aufweist: $Gelfraktion \left(A\right) \left(%\right) = \left(W7b/W6b\right) \times 100$ wobei W6b die Masse des Außenflächenbeschichtungsfilms darstellt, der von einem beschichteten Metallsubstrat isoliert wurde, das aus dem beschichteten Metallblech ausgeschnitten wurde, und W7b die Masse des isolierten Außenflächenbeschichtungsfilms darstellt, nachdem dieser 60 Minuten lang bei einer Temperatur von 20 °C ± 5 °C in Methylethylketon eingetaucht und anschließend herausgenommen und getrocknet wurde.

16. Beschichtetes Metallblech nach Anspruch 14 oder 15, wobei der Gehalt an Isophthalsäure in dem nichtkristallinen Polyesterharz, das in dem Innenflächenbeschichtungsfilm enthalten ist, weniger als 21 mol% beträgt.

17. Beschichtetes Metallblech nach einem der Ansprüche 14 bis 16, wobei der Gehalt an Isophthalsäure in dem nichtkristallinen Polyesterharz, das in dem Innenflächenbeschichtungsfilm enthalten ist, 4 mol% oder mehr beträgt.

## Revendications

1. Boîte sans soudure comprenant un film de revêtement de surface interne au moins sur un côté de surface interne de la boîte, dans laquelle
quand le film de revêtement de surface interne contient une résine polyester non cristalline (aucun point de fusion net d'un composant cristallin n'est observé lors d'une mesure par analyse calorimétrique différentielle) et que la quantité totale de composants d'acide carboxylique polyvalent de la résine polyester non cristalline est de 100 % en moles, la teneur en acide dicarboxylique aromatique est de 70 % en moles ou plus, et
le film de revêtement de surface interne présente une fraction de gel (A), représentée par la formule (1a) ci-dessous, inférieure à 90 % : $Fraction de gel \left(A\right) = \left(W2a/W1a\right) x 100 \left(%\right)$
où W1a représente la masse du film de revêtement de surface interne isolé d'un substrat métallique revêtu découpé à partir de la boîte sans soudure, et W2a représente la masse du film de revêtement de surface interne isolé après immersion dans de la méthyléthylcétone à une température de 20 °C ± 5 °C pendant 60 minutes, puis retiré et séché.

2. Boîte sans soudure selon la revendication 1, dans laquelle le film de revêtement de surface interne présente une fraction de gel (B), représentée par la formule (2a) ci-dessous, supérieure de 10 % ou plus à la fraction de gel (A) : $Fraction de gel \left(B\right) = \left[\left(W4a-W5a\right)/\left(W3a-W5a\right)\right] x 100 \left(%\right)$ où W3a représente la masse d'un substrat métallique revêtu découpé à partir de la boîte sans soudure et sur lequel le film de revêtement de surface interne est formé, W4a représente la masse du substrat métallique revêtu après immersion dans de la méthyléthylcétone à 80 °C pendant 60 minutes, puis retiré et séché, et W5a représente la masse d'un substrat métallique après le retrait du film de revêtement de surface interne du substrat métallique revêtu.

3. Boîte sans soudure selon la revendication 1 ou 2, dans laquelle le film de revêtement de surface interne contient une résine phénolique de type résol et/ou une résine aminée en tant qu'agent de durcissement.

4. Boîte sans soudure selon l'une quelconque des revendications 1 à 3, dans laquelle la teneur en acide isophtalique de la résine polyester non cristalline est inférieur à 21 % en moles.

5. Boîte sans soudure selon la revendication 4, dans laquelle, quand la quantité totale de composés d'acide carboxylique polyvalente de la résine polyester non cristalline est de 100 % en moles, la teneur en acide téréphtalique est de 60 % en moles ou plus.

6. Boîte sans soudure selon la revendication 4 ou 5, dans lequel, quand la quantité totale de composés d'acide carboxylique de la résine polyester non cristalline est de 100 % en moles, la teneur en acide isophtalique est de 2 % en moles ou plus et 21 % en moles ou moins.

7. Boîte sans soudure selon l'une quelconque des revendications 1 à 3, dans laquelle la teneur en acide isophtalique de la résine polyester non cristalline est de 4 % en moles ou plus.

8. Boîte sans soudure selon l'une quelconque des revendications 1 à 7, dans laquelle :
(a) l'épaisseur d'une partie centrale d'un corps de boîte est de 20 à 75 % de l'épaisseur d'une partie centrale d'un fond de boîte, et l'épaisseur du film de revêtement de surface interne présent au niveau de la partie centrale du corps de boîte est de 20 à 75 % de l'épaisseur du film de revêtement de surface interne présent au niveau de la partie centrale du fond de boîte, et/ou
(b) le rapport entre l'épaisseur du film de revêtement de surface interne et celle d'un substrat métallique (épaisseur du film de revêtement de surface interne/épaisseur du substrat métallique) est sensiblement identique au niveau d'une partie de fond de boîte et d'une partie de corps de boîte.

9. Boîte sans soudure selon l'une quelconque des revendications 1 à 8, comprenant en outre un film de revêtement de surface externe sur un côté de surface externe de la boîte, le film de revêtement de surface externe comprenant une résine polyester non cristalline et une résine aminée en tant qu'agent de durcissement.

10. Boîte sans soudure selon la revendication 9, dans laquelle le film de revêtement de surface externe présente une fraction de gel (A), représentée par la formule (3a) ci-dessous, inférieure à 90 % : $Fraction de gel \left(A\right) = \left(W7a/W6a\right) x 100 \left(%\right)$ où W6a représente la masse du film de revêtement de surface externe isolé d'un substrat métallique revêtu découpé à partir de la boîte sans soudure, et W7a représente la masse du film de revêtement de surface externe isolé après immersion dans de la méthyléthylcétone à une température de 20 °C ± 5 °C pendant 60 minutes, puis retiré et séché.

11. Boîte sans soudure selon l'une quelconque des revendications 1 à 10, dans laquelle le taux de retrait thermique du film de revêtement de surface interne au niveau d'une partie centrale d'un corps de boîte, représenté par la formule (5) ci-dessous, est de 30 % ou moins : $Taux de retrait thermique \left(%\right) = \left({ΔL}_{1}/{L}_{0}\right) x 100$ où L₀ est la longueur initiale du film de revêtement isolé de la partie centrale du corps de boite dans le sens de la hauteur, et ΔL₁ est la quantité maximale de retrait du film de revêtement d'une partie correspondant à L₀ dans le sens de la hauteur, quand la température est élevée de 30 °C à 200 °C à une vitesse de montée en température de 5 °C/min sous application d'une charge de 5,20 x 10⁵ N/m₂ par unité de surface.

12. Boîte sans soudure selon l'une quelconque des revendications 1 à 11, dans laquelle le taux de retrait thermique du film de revêtement de surface interne au niveau d'une partie centrale d'un corps de boîte, représenté par la formule (6) ci-dessous, est de 50 % ou moins : $Taux de retrait thermique \left(%\right) = \left({ΔL}_{2}/{L}_{0}\right) \times 100$ où L₀ est la longueur initiale du film de revêtement isolé de la partie centrale du corps de boîte dans le sens de la hauteur, et ΔL₂ est la quantité maximale de retrait du film de revêtement d'une partie correspondant à L₀ dans le sens de la hauteur, quand la température est élevée de 30 °C à 200 °C à une vitesse de montée en température de 5 °C/min sans charge.

13. Boîte sans soudure selon l'une quelconque des revendications 1 à 12, dans laquelle le degré de recouvrement du film de revêtement de surface interne, mesuré selon la méthode « Évaluation de la propriété de recouvrement du film de revêtement de surface interne » de la description, est inférieur à 200 mA, relativement à la valeur d'évaluateur d'émail (ERV, enamel rater value).

14. Tôle revêtue destinée à une boîte sans soudure, la tôle revêtue comprenant un film de revêtement de surface interne au moins sur une surface destinée à devenir une surface interne de boîte après façonnage, dans laquelle
quand le film de revêtement de surface interne contient une résine polyester non cristalline (aucun point de fusion net d'un composant cristallin n'est observé lors d'une mesure par analyse calorimétrique différentielle) et une résine phénolique de type résol et/ou une résine aminée en tant qu'agent de durcissement, et que la quantité totale de composants d'acide carboxylique polyvalent de la résine polyester non cristalline est de 100 % en moles, la teneur en acide dicarboxylique aromatique est de 70 % en moles ou plus,
le film de revêtement de surface interne présente une fraction de gel (A), représentée par la formule (1b) ci-dessous, inférieure à 90 %, et
le film de revêtement de surface interne présente une fraction de gel (B), représentée par la formule (2b) ci-dessous, supérieure de 10 % ou plus à la fraction de gel (A) : $Fraction de gel \left(A\right) \left(%\right) = \left(W2b/W1b\right) \times 100$
où W1b représente la masse du film de revêtement de surface interne isolé d'un substrat métallique revêtu découpé à partir de la tôle revêtue, et W2b représente la masse du film de revêtement de surface interne isolé après immersion dans de la méthyléthylcétone à une température de 20 °C ± 5 ° pendant 60 minutes, puis retiré et séché ; $Fraction de gel \left(B\right) \left(%\right) = \left[\left(W4b-W5b\right)/\left(W3b-W5b\right)\right] \times 100$
où W3b représente la masse d'un substrat métallique revêtu découpé à partir de la tôle revêtue et sur lequel le film de revêtement de surface interne est formé, W4b représente la masse du substrat métallique revêtu après immersion dans de la méthyléthylcétone à 80 °C pendant 60 minutes, puis retiré et séché, et W5b représente la masse d'un substrat métallique après retrait du film de revêtement de surface interne du substrat métallique revêtu.

15. Tôle revêtue selon la revendication 14, comprenant en outre un film de revêtement de surface externe sur une surface destinée à devenir une surface externe de boîte après façonnage, dans laquelle le film de revêtement de surface externe contient une résine polyester non cristalline et une résine aminée en tant qu'agent de durcissement, et le film de revêtement de surface externe présente une fraction de gel (A), représentée par la formule (3b) ci-dessous, inférieure à 90 % : $Fraction de gel \left(A\right) \left(%\right) = \left(W7b/W6b\right) \times 100$ où W6b représente la masse du film de revêtement de surface externe isolé d'un substrat métallique revêtu découpé à partir de la tôle revêtue, et W7b représente la masse du film de revêtement de surface externe isolé après immersion dans de la méthyléthylcétone à une température de 20 °C ± 5 °C pendant 60 minutes, puis retiré et séché.

16. Tôle revêtue selon la revendication 14 ou 15, dans laquelle la teneur en acide isophtalique de la résine polyester non cristalline contenue dans le film de revêtement de surface interne est inférieure à 21 % en moles.

17. Tôle revêtue selon l'une quelconque des revendications 14 à 16, dans laquelle la teneur en acide isophtalique de la résine polyester cristalline contenue dans le film de revêtement de surface interne est de 4 % en moles ou plus.
